# EUROPÄISCHE PATENTSCHRIFT

(11) **EP 3 011 225 B1**
(45) Veröffentlichungstag und Bekanntmachung des Hinweises auf die Patenterteilung: **20.03.2019**
(21) Anmeldenummer: 14729669.3
(22) Anmeldetag: 13.06.2014
(51) Int. Cl.: F16P 3/14

(54) **VORRICHTUNG UND VERFAHREN ZUM ABSICHERN EINER AUTOMATISIERT ARBEITENDEN MASCHINE**
DEVICE AND METHOD FOR SECURING A MACHINE THAT OPERATES IN AN AUTOMATED MANNER
DISPOSITIF ET PROCÉDÉ POUR PROTÉGER UNE MACHINE FONCTIONNANT DE MANIÈRE AUTOMATISÉE

(30) Priorität: 21.06.2013 DE 102013106514
(43) Veröffentlichungstag der Anmeldung: 27.04.2016
(73) Patentinhaber: Pilz GmbH & Co. KG, 73760 Ostfildern (DE)
(72) Erfinder: DOETTLING, Dietmar, 73760 Ostfildern (DE); HADER, Soeren, 73760 Ostfildern (DE)
(74) Vertreter: Witte, Weller & Partner Patentanwälte mbB
(86) Internationale Anmeldenummer: PCT/EP2014/062321
(87) Internationale Veröffentlichungsnummer: WO 2014/202471

(56) Entgegenhaltungen:
- EP-A2- 0 902 402
- EP-A2- 1 306 603
- EP-A2- 1 548 351
- DE-A1-102009 034 848

## Beschreibung

Die vorliegende Erfindung betrifft eine Vorrichtung gemäß dem Oberbegriff des Anspruchs 1 zum Absichern eines Überwachungsbereichs, in welchem eine automatisiert arbeitende Maschine angeordnet ist, mit einem Kamerasystem zur Überwachung des Überwachungsbereichs, mit einer Konfigurationseinheit zur Definition von zumindest einem Schutzbereich innerhalb des Überwachungsbereichs, und mit einer Auswerteeinheit zum Auslösen einer sicherheitsrelevanten Funktion, wobei das Kamerasystem Bilder von dem Schutzbereich liefert und die Auswerteeinheit auswertet, ob ein Fremdobjekt in dem Schutzbereich vorhanden ist oder in diesen eindringt, wobei die Auswerteeinheit ferner dazu eingerichtet ist, ein in dem Schutzbereich vorhandenes oder in diesen eindringendes Fremdobjekt durch Analyse der Kamerabilder zu klassifizieren, um anhand eines oder mehrerer für nicht sicherheitskritische Objekte charakteristischer Merkmale zu bestimmen, ob es sich bei dem Fremdobjekt um ein nicht sicherheitskritisches Objekt handelt, und wobei die Auswerteeinheit dazu eingerichtet ist, die sicherheitsrelevante Funktion auszulösen, wenn das Fremdobjekt nicht als nicht sicherheitskritisches Objekt erkannt wurde.

Eine derartige Vorrichtung ist aus der DE 10 2009 034 848 A1 bekannt. Die DE 10 2009 034 848 A1 betrifft einen optoelektronischen Sensor zur Überwachung eines inneren Überwachungsbereichs und eines äußeren Überwachungsbereichs, welcher den inneren Überwachungsbereich zumindest teilweise umgibt. Der optoelektronische Sensor weist eine Auswertungseinheit auf, die für eine Objekterkennung mit Störausblendung von dem Sensor erfasste potentielle Objekte als Objekte oder Störungen erkennt, sowie für eine Objektverfolgung der Objekte zumindest in dem äußeren Überwachungsbereich ausgebildet ist. Dabei ist die Auswertungseinheit dafür ausgebildet, potentielle Objekte als Störung zu erkennen, wenn eine Eigenschaft, insbesondere eine Position, ein Betrag oder eine Richtung der Geschwindigkeit des potentiellen Objekts unverträglich mit der Objektverfolgung ist.

Die vorliegende Erfindung betrifft ferner ein entsprechendes Verfahren gemäß dem Oberbegriff des Anspruchs 13 zum Absichern eines Überwachungsbereichs, in welchem eine automatisiert arbeitende Maschine angeordnet ist.

Bei modernen Industrierobotern, die sich mit erheblichen Geschwindigkeiten bewegen, führen Kollisionen in der Regel zu ernsthaften Schäden, sowohl an den Robotern als auch an dem von diesen gehandhabten Werkstücken. Dies kann zu kostspieligen Produktionsausfällen führen. Auch hat die Sicherheit von Personen, welche mit den automatisiert arbeitenden Robotern interagieren, höchste Priorität. Bei modernen Industrierobotern und anderen Maschinen mit bewegten Maschinenelementen, deren Bewegung eine Gefahr für Personen und andere Objekte darstellen, muss daher durch Schutzeinrichtungen verhindert werden, dass es zu einer Kollision zwischen den bewegten Maschinenelementen und einem Fremdobjekt kommt. Dazu ist es meist ausreichend, die Maschine zum Stillstand zu bringen, bevor ein ungewollter Kontakt erfolgt.

Traditionell werden Gefahrenbereiche um automatisiert arbeitende Maschinen herum mit mechanischen Absperrungen in Form von Schutzzäunen und Schutztüren oder mit Hilfe von Lichtschranken, Lichtgittern und Laserscannern abgesichert. Häufig werden die Lichtschranken, Lichtgitter und Laserscanner auch in Kombination mit den erstgenannten mechanischen Absperrungen eingesetzt. Sobald eine Person eine Schutztür öffnet oder ein Lichtgitter oder eine Lichtschranke unterbricht, wird ein Abschaltsignal erzeugt, mit dem die gefährliche Arbeitsbewegung der Maschine angehalten wird, oder die Maschine in einen sicheren Zustand gebracht wird. Die Installation derartiger Schutzeinrichtungen ist allerdings recht aufwändig und die Schutzeinrichtungen benötigen viel Platz um eine gefährliche Maschine herum. Außerdem sind derartige Schutzeinrichtungen wenig flexibel, wenn es darum geht, die Absicherung des gefährlichen Arbeitsbereichs an unterschiedliche Betriebssituationen der Maschine anzupassen.

Insbesondere bei den optoelektronischen Sensoren wie Lichtgitter, Lichtschranken oder Reflexionslichttaster kann es zu ungewollten Abschaltungen der Maschinen oder Anlagen kommen. Kleinstteile oder Störlichter, welche sicherheitstechnisch eigentlich unbedenklich wären, lösen dennoch das Abschaltsignal aus. Dies führt häufig zu unnötigen Einschränkungen der Maschinen- und Anlagenverfügbarkeit, da eineAbschaltung auch in Situationen erfolgt, welche aus sicherheitstechnischer Sicht unbedenklich sind. Es gibt daher Bestrebungen, Störobjekte und Störlichter bei Lichtgittern, Lichtschranken oder Reflexionslichttastern auszufiltern. Eine bekannte Technik ist, dass der Lichtsender bitcodierte Lichtsignale aussendet, die vom Empfänger decodiert und mit
Sollwerten verglichen werden. Bei Reflexionslichttastern wird unter anderem polarisiertes Licht verwendet. Dadurch werden selbst Spiegel oder helle Objekte noch als Strahlenunterbrechung detektiert.

Eine weitere bekannte Technik ist aus der DE 202 12 769 U1 bekannt. Die DE 202 12 769 U1 zeigt ein Lichtgitter, das zur Generierung eines Objektfeststellungssignals eine vorgegebene Anzahl mehrerer Abtastzyklen hinsichtlich des Auftretens von Strahlenunterbrechungen von Strahlachsen auswertet. Dies dient der Unterdrückung von transienten Störungen. Kleinere, unrelevante Störobjekte wie Insekten, Pollenstaub, Sägespäne und Sägestaub sollen durch sog. Mehrfachauswertungen unterdrückt werden. Dies entspricht einem zeitlichen Filter, der für eine definierte Zeit eine Unterbrechung des Schutzbereichs oder Teile davon toleriert, da man davon ausgeht, dass Störobjekte nur temporär auftauchen. Nachteilig dabei ist, dass in dieser Zeit auch "echte" Verletzungen nicht detektiert werden, d.h. faktisch führt dies zu einer Verlängerung der Reaktionszeit und folglich zu größeren Sicherheitsabständen. Erschwerend kommt hinzu, dass Störobjekte nicht nur temporär auftauchen, sondern durchaus auch längere Zeit vorhanden sind. In diesem Fall hilft der zeitliche Filter nicht, so dass der optoelektronische Sensor eine Verletzung dennoch erkennen würde und demzufolge ein Abschaltsignal erzeugt.

Um die oben genannten Nachteile zu vermeiden, gibt es seit einiger Zeit Bemühungen, die Absicherung des gefährlichen Arbeitsbereichs einer automatisiert arbeitenden Maschine mit Hilfe von Kamerasystemen und geeigneter Bildverarbeitung zu realisieren. Ein solches System wird von der Anmelderin unter dem Namen "SafetyEYE" vertrieben. Charakteristisch an solchen Kamerasystemen ist, dass im Gegensatz zu normalen Kameras selbst dann, wenn eine Fehlfunktion auftritt, stets ein sicherer Zustand der Gefahr bringenden Maschine oder Anlage gewährleistet sein muss. Vorteilhaft bei der Verwendung von Kamerasystemen ist auch, das Volumen anstatt von einzelnen Linien oder Flächen abgesichert werden können. Solche Kamerasysteme ermöglichen es nämlich, dreidimensionale Schutzbereiche von allen Seiten virtuell zu überwachen. Damit ist es möglich, die Sicherheit erneut zu steigern und lückenlos zu überwachen.

Die EP 1 543 270 B1 beschreibt ein solches System mit zumindest zwei Kameras, die zyklisch Bilder von dem gefährlichen Arbeitsbereich liefern. Die Bilder der Kameras werden mit zumindest zwei algorithmisch unterschiedlichen Verfahren analysiert, wobei die gefährliche Arbeitsbewegung der Maschine angehalten wird oder in einen sicheren Zustand gebracht wird, wenn zumindest eines der beiden Verfahren eine Fremdobjektdetektion in einem zuvor definierten Schutzbereich liefert. Jedes der beiden Analyseverfahren erzeugt 3D-Informationen aus den Bildern der Kameras, so dass mit Hilfe der Verfahren die Position von Objekten in dem definierten Schutzbereich festgelegt werden kann. Eine große Herausforderung an solchen Verfahren und Vorrichtungen besteht darin, dass die ohnehin schon komplexe Bildverarbeitung fehlersicher im Sinne einschlägiger Normen zur Maschinensicherheit realisiert sein muss, insbesondere EN ISO 13849-1, IEC 61508, EN ISO 13855 und IEC 61496, damit eine solche Vorrichtung tatsächlich auch zur Absicherung einer gefährlichen Maschine eingesetzt werden kann. Ein Versagen der Vorrichtung selbst darf nicht dazu führen, dass die Absicherung der Maschine verlorengeht. Als fehlersicher in diesem Sinne gilt im Folgenden daher eine Vorrichtung, die zumindest SIL 2 gemäß IEC 61508 und/oder den Performancelevel PL (d) gemäß EN ISO 13849 erreicht. Das aus der EP 1 543 270 B1 bekannte Verfahren und eine entsprechende Vorrichtung können dies leisten und haben sich in praktischen Einsätzen bereits bewährt.

Bei den zuletzt genannten Kamera-basierten Sicherheitssystemen werden um die Maschine herum meist virtuelle Schutzbereiche definiert. Das Kamerasystem detektiert dann, ob ein Fremdobjekt in einen solchen Schutzbereich eindringt und schaltet daraufhin dann die Maschine oder Anlage ab, oder bringt diese in einen sicheren Zustand. Dennoch besteht auch bei diesen Systemen das Problem, dass die Gefahr bringende Bewegung der Maschine oder Anlage teilweise ohne ersichtlichen Grund angehalten wird, was zu einem Stillstand der Produktionsanlagen und zu Produktionsausfällen führt. Dies kann bspw. an Kleinstteilen liegen, welche in die virtuellen Schutzbereiche eindringen, als Fremdobjekte detektiert werden und damit die sicherheitsrelevante Funktion auslösen. Dies ist insbesondere bei sehr kurzen Taktzeiten und langen verketteten Produktionslinien, die besonders in der Automobilindustrie vorzufinden sind, nicht erwünscht.

Die DE 102 51 584 A1 schlägt ein solches Kamera-basiertes Sicherheitssystem und zugehöriges Verfahren vor, bei dem die Sicherheit durch eine optimierte Bildverarbeitung erhöht werden soll. Zur Objekterfassung werden Bildmerkmale aktueller Kamerabilder mit einem Referenzbildmerkmal eines abgespeicherten Referenzhintergrundes verglichen. Der genannte Referenzhintergrund muss bei diesem System in einer Einlernphase oder einem sog. Teach-In-Vorgang in dem System referenziert werden. Gemäß dem vorgeschlagenen Verfahren liegt ein gültiger Referenzhintergrund nur dann vor, wenn bei der Überprüfung des Referenzhintergrundes in beiden Rechnereinheiten übereinstimmend als Ergebnis erhalten wird, dass keine benachbarten Zonen mit demselben Referenzbildmerkmal innerhalb des Referenzhintergrundes vorliegen. Dieser Teach-In-Vorgang kann somit relativ langwierig und aufwändig sein. Bei der nachfolgenden Bilderfassung des Schutzbereichs werden die Bildmerkmale der Kamerabilder in sicherheitskritische und nicht sicherheitskritische Objekte unterschieden. Zu den sicherheitskritischen Objekten zählen die Bedienpersonen, vorzugsweise die Arme einer Bedienperson. Nicht sicherheitskritische Objekte bilden bspw. statische Objekte im Umfeld der Maschine oder Anlage, insbesondere auch die von diesem zu bearbeitenden Teile. Führt der Vergleich der Bildmerkmale mit dem Referenzhintergrund nicht zu einem übereinstimmenden Ergebnis, wird aus Sicherheitsgründen das Arbeitsmittel ebenfalls außer Betrieb gesetzt, da in diesem Fall nicht auszuschließen ist, dass sich ein sicherheitskritisches Objekt in der Schutzzone befindet. Kleinstteile, welche unkritisch sein könnten, jedoch im Referenzhintergrund nicht abgebildet sind, würden also auch bei diesem System zu einem ungewollten Abschalten der Maschine oder Anlage führen. Das oben beschriebene Problem ungewollter Einschränkungen der Maschinen- oder Anlagenverfügbarkeit, wird also auch durch dieses Verfahren nur teilweise gelöst.

Die EP 0 902 402 A2 zeigt ein Verfahren zur optischen Überwachung eines Raumbereichs, wobei von dem Raumbereich mit einer Kamera ein digitales Bild erzeugt wird und die Grauwerte des aktuellen Bildes mit den Grauwerten eines Referenzbildes in einer Auswerteeinheit pixelweise verglichen und das Ergebnis ausgewertet wird.

Weiterer Stand der Technik wir durch die EP 1 306 603 A2 und EP 1 548 351 A2 gebildet. Vor diesem Hintergrund ist es eine Aufgabe der vorliegenden Erfindung, eine Vorrichtung und ein Verfahren der eingangs genannten Art anzugeben, die im Vergleich zum Stand der Technik weniger ungewollte Abschaltungen erzeugt, damit zu einer Erhöhung der Maschinen- und Anlagenverfügbarkeit beiträgt, dennoch aber die für solche Anwendungen erforderliche Fehlersicherheit gewährleistet.
Gemäß einem ersten Aspekt der Erfindung wird diese Aufgabe durch eine Vorrichtung der eingangs genannten Art dadurch gelöst, dass die nicht sicherheitskritischen Objekte Schweißfunken aufweisen, und dass die Auswerteeinheit dazu eingerichtet ist, in zumindest einem der Kamerabilder einen räumlichen Grauwert-Verlauf im Bildbereich eines detektierten Fremdobjekts zu bestimmen, um anhand dessen zu bestimmen, ob es sich bei dem Fremdobjekt um einen Schweißfunken handelt.

Gemäß einem weiteren Aspekt der vorliegenden Erfindung wird diese Aufgabe durch ein Verfahren der eingangs genannten Art gelöst, mit den Schritten:
- Überwachen des Überwachungsbereichs mit einem Kamerasystem,
- Definition von zumindest einem Schutzbereich innerhalb des Überwachungsbereichs,
- Auswerten von Kamerabildern des Kamerasystems von dem Schutzbereich, um zu detektieren, ob ein Fremdobjekt in dem Schutzbereich vorhanden ist oder in diesen eindringt,
- Klassifizieren des Fremdobjekts durch Analyse der Kamerabilder, um anhand eines oder mehrere für Schweißfunken charakteristischer Merkmale zu bestimmen, ob es sich bei dem Fremdobjekt um einen Schweißfunken handelt,
- Auslösen einer sicherheitsrelevanten Funktion, wenn das Fremdobjekt nicht als Schweißfunken erkannt wurde,
   wobei das Klassifizieren des Fremdobjekts beinhaltet, das in zumindest einem der Kamerabilder ein räumlicher Grauwert-Verlauf im Bildbereich eines detektierten Fremdobjekts bestimmt wird, um anhand dessen zubestimmen, ob es sich bei dem Fremdobjekt um einen Schweißfunken handelt.

Besonders vorteilhaft ist es, wenn das neue Verfahren und die neue Vorrichtung mit Hilfe eines Computerprogrammprodukts mit Programmcode realisiert werden, der dazu ausgebildet ist, das genannte Verfahren auszuführen, wenn der Programmcode in einer Steuerungseinheit der Vorrichtung ausgeführt wird. Dementsprechend sind die Konfigurationseinheit und die Ausführungseinheit in diesem bevorzugten Ausführungsbeispiel in Form eines Softwaremoduls realisiert, das in der Steuerungseinheit der Vorrichtung ausgeführt wird.

Die neue Vorrichtung und das neue Verfahren eignen sich insbesondere zur Überwachung von Roboteranlagen in der Automobiltechnik, vor allem in den Bereichen Roh- und Karosseriebau. Dieser Bereich der Automobilproduktion ist meistens hochautomatisiert und dadurch gekennzeichnet, dass verschiedenste Schweißaufgaben von Robotern mit entsprechenden Schweißwerkzeugen durchgeführt werden. Bei sog. Punktschweißvorgängen kommt es immer wieder, abhängig von der Abnutzung der Schweißwerkzeuge, zu Funkenflug. Schweißfunken fliegen von der Schweißstelle in alle Richtungen, entweder als einzelne Funken, oder als Funkenwolke. Bei Kamera-basierten Sicherheitssystemen der oben genannten Art würden solche Schweißfunken, welche auch als transiente Störungen bezeichnet werden, zu einem ungewollten Abschalten und damit zu einer begrenzten Verfügbarkeit der Maschine führen. Die Erfinder der vorliegenden Erfindung haben jedoch erkannt, dass sich solche Schweißfunken aufgrund ihrer charakteristischen Merkmale relativ einfach detektieren lassen und somit rausgefiltert werden können, ohne dass dies zu Einschränkungen in der Sicherheit des Systems führt.

Bei den aus dem Stand der Technik bekannten Kamera-basierten Sicherheitssystemen wird üblicherweise nicht unterschieden, welches Objekt die Schutzraumverletzung verursacht hat. Dies ist unter sicherheitstechnischen Gesichtspunkten auch sehr schwierig und bedenklich, da eine falsche Klassifizierung nicht ausgeschlossen werden kann und dazu führt, dass die gefährliche Bewegung der Maschine oder Anlage nicht gestoppt wird, obwohl sich z.B. ein Mensch im Gefahrenbereich befindet. Die vorliegende Erfindung wählt aber den umgekehrten Weg, nämlich dass zunächst alle erkannten Objekte eine Schutzbereichsverletzung darstellen. Diese Objekte werden also alle als Fremdobjekte erkannt und anhand ihrer Eigenschaften identifiziert, ob es sich um sicherheitsrelevante Fremdobjekte oder um Schweißfunken handelt. Dies kann im schlimmsten Fall dazu führen, dass eine Fehlabschaltung nicht unterdrückt wird. Voraussetzung ist lediglich, dass die Fremdobjekte charakteristische Merkmale aufweisen, die sich eindeutig zu denjenigen Objekten, die erkannt werden sollen (z.B. Menschen), unterscheiden.

Die Erfinder haben jedoch erkannt, dass eine derartige Unterscheidung bei Schweißfunken durchaus möglich ist. Schweißfunken haben sehr charakteristische Merkmale, welche durch Analyse der Kamerabilder eindeutig detektierbar sind. Insbesondere im Vergleich zu Menschen oder anderen gefährlichen Maschinenteilen oder Störobjekten besitzen Schweißfunken eine charakteristische Form und Helligkeit bzw. einen charakteristischen Helligkeitsverlauf. Schweißfunken sind in den Kamerabildern meist als ein Helligkeitsschweif ersichtlich, was mit deren hohen Geschwindigkeiten und der Trägheit der Kamerasensoren zusammenhängt. Aus der Form eines solchen Schweißfunken-Schweifs lassen sich daher Rückschlüsse auf die Geschwindigkeit der Schweißfunken sowie auf deren Flugrichtung ziehen. Durch die starke Erwärmung des Materials besitzen Schweißfunken im sichtbaren Wellenbereich eine drastische Aufhellung, die sich deutlich vom Hintergrund im Kamerabild unterscheiden lässt. Insbesondere mit einer Kameratechnik, die ihre Umgebung hochdynamisch abbilden kann, ist eine quantitative Abschätzung der Helligkeiten besonders gut möglich. Anhand von statistischen Auswertungen der Kamerabilder lässt sich in der Auswerteeinheit der Vorrichtung daher mit ausreichender Sicherheit feststellen, ob es sich bei einem detektierten Fremdobjekt um einen Schweißfunken handelt oder nicht. Erfindungsgemäß ist die Auswerteeinheit dazu eingerichtet, die sicherheitsrelevante Funktion in jedem Fall auszulösen, wenn das Fremdobjekt nicht oder nicht mit genügender Sicherheit als Schweißfunken erkannt wurde. Unter der sicherheitsrelevanten Funktion wird vorliegend ein Vorgang verstanden, der entweder ein Abschalten der Maschine zur Folge hat, oder diese in einen sicheren Zustand bringt. Bei den Kamerabildern kann es sich sowohl um zweidimensional als auch um dreidimensionale Bilddaten handeln.

Die erfindungsgemäße Vorrichtung und das erfindungsgemäße Verfahren erhöhen also die Toleranz gegenüber Störeinflüssen beim Schweißen, ohne dass dies die Sicherheit des Systems beeinträchtigt. Schweißfunken können durch Analyse der Kamerabilder eindeutig erkannt und unterdrückt werden. Dies erhöht insbesondere bei abzusichernden Robotern mit entsprechenden Schweißwerkzeugen die Maschinenverfügbarkeit durch Reduzierung von ungewollten Fehlabschaltungen.

Die oben genannte Aufgabe ist daher vollständig gelöst.

In einer bevorzugten Ausgestaltung weist die Vorrichtung des Weiteren eine Bildkorrektur-Einheit auf, welche dazu eingerichtet ist, räumliche Bereiche in den Kamerabildern zu ersetzen oder zu korrigieren, wenn in diesen Bereichen durch die Auswerteeinheit ein Schweißfunke detektiert wurde.

Unter den oben genannten räumlichen Bereichen sind im Falle von 2D-Bildaten flächige Bereiche zu verstehen. Dieser Ausgestaltung liegt die Idee zugrunde, Fremdobjekte, die von der Auswerteeinheit aufgrund ihrer charakteristischen Merkmale als Schweißfunken erkannt wurden, herauszufiltern und durch Bilddaten zu ersetzen, die von der Auswerteeinheit in nachgelagerten Bearbeitungsstufen nicht mehr als Teile von Fremdobjekten erkannt werden und zu einer Auslösung der sicherheitsrelevanten Funktion führen können. Die detektierten Schweißfunken werden also sozusagen aus den Kamerabildern herausgelöscht. Dies kann pixelweise oder für gesamte Pixelbereiche um den detektierten Schweißfunken herum erfolgen. Vorzugsweise ist die Bildkorrektur-Einheit dazu eingerichtet, diesen Bildkorrektur- bzw. Bildersetzungs-Vorgang bereits anhand der Rohbilddaten der gelieferten Kamerabilder vorzunehmen. Für nachgelagerte Bearbeitungsstufen, die bewerten, ob sich Fremdobjekte im virtuellen Schutzbereich befinden oder nicht, sind die Schweißfunken also gar nicht mehr sichtbar bzw. im Kamerabild vorhanden. Dies hat den Vorteil, dass keine wertvolle Rechenzeit mehr verschwendet werden muss. In den nachgelagerten Bearbeitungsstufen lassen sich also die üblichen Detektionsalgorithmen zur Erkennung von Fremdobjekten verwenden, welche bei solchen Kamera-basierten Sicherheitssystemen eingesetzt werden und keine solche Klassifizierung (Schweißfunken oder nicht) einsetzen.

Es versteht sich jedoch, dass auch der umgekehrte Ansatz mit der vorliegenden Vorrichtung realisiert werden kann, nämlich, dass die Auswerteeinheit dazu eingerichtet ist, erst in einer nachgelagerten Bearbeitungsstufe die Schutzbereichsverletzung zu klassifizieren und erst dann zu detektieren, ob es sich bei der Schutzbereichsverletzung um einen Schweißfunken handelt oder nicht.

In einer weiteren Ausgestaltung ist die Bildkorrektur-Einheit dazu eingerichtet, die zu ersetzenden räumlichen Bereiche durch Bilddaten zeitlich vorangegangener Kamerabilder zu ersetzen.

Dies ist eine relativ einfache Möglichkeit, die wenig Rechenaufwand erfordert. Sobald ein Schweißfunken in einem der Kamerabilder durch die Auswerteeinheit detektiert wird, werden die entsprechenden Bildpixel von der Bildkorrektur-Einheit durch Bildpixel vorangegangener Kamerabilder ersetzt. Auch dies kann wiederum Pixel pro Pixel geschehen, oder für eine gesamte Gruppe von Bildpixeln. Ein Abspeichern eines Referenzbildes, welches ansonsten zur Ersetzung der entsprechenden Bildpixel verwendet wird, ist bei dieser Ausgestaltung nicht notwendig. Im Übrigen hat diese Ausgestaltung den Vorteil, dass bei einer Ersetzung der entsprechenden Bildpixel durch Bildpixel zeitlich vorangegangener Kamerabilder die Sicherheit zusätzlich erhöht wird. Taucht in den ersetzten Bildpixeln, nämlich wiederum ein Fremdobjekt oder das gleiche Fremdobjekt auf, so ist die Wahrscheinlichkeit hoch, dass es sich bei dem als Schweißfunken erkannten Fremdobjekt eventuell doch nicht um einen Schweißfunken, sondern um ein sicherheitsrelevantes Teil handelt. Im günstigsten Fall kann die Region durch das direkte Vorgängerbild pixelweise ersetzt werden, da keine räumliche Änderung der Kameraposition stattfand. Auf diese Weise werden keine weiteren sichtbaren Objekte, die sich im Überwachungsbereich befinden, eliminiert. Dieser Vorgang wird vorzugsweise in allen verfügbaren Kamerabildern durchgeführt, so dass keine Messungen der Schweißfunken, aber auch keine künstlichen Fehlmessungen möglich sind.

In einer weiteren Ausgestaltung ist die Auswerteeinheit dazu eingerichtet, Grauwerte einzelner Pixel der Kamerabilder auszuwerten und diese mit einem Grauwert-Schwellenwert zu vergleichen, um anhand dessen zu bestimmen, ob es sich bei dem Fremdobjekt um einen Schweißfunken handelt.

Die aufgrund der Hitze solcher Schweißfunken auftretende starke Helligkeit zeichnet sich in den Kamerabildern durch hohe Grauwerte ab. Schweißfunken erzeugen in den Kamerabildern wenige Pixel große, helle Punkte mit maximalen Grauwerten. Diese Grauwerte übersteigen üblicherweise den Wert, welchen Körperteile von Menschen oder andere sicherheitsrelevante Teile auf den Kamerabildern erzeugen. Durch den Vergleich der Grauwerte einzelner Pixel mit einem Grauwert-Schwellenwert, welche für Schweißfunken typisch ist, lassen sich Schweißfunken daher relativ exakt von anderen Objekten unterscheiden.

Gemäß einer weiteren Ausgestaltung ist die Auswerteeinheit dazu eingerichtet, eine Geschwindigkeit des Fremdobjekts anhand zumindest eines der Kamerabilder auszuwerten und diese mit einem Geschwindigkeits-Schwellenwert zu vergleichen, um anhand dessen zu bestimmen, ob es sich bei dem Fremdobjekt um einen Schweißfunken handelt.

Die hohen Geschwindigkeiten von Schweißfunken sind ein eindeutiges Erkennungsmerkmal. Personen oder Maschinenteile bewegen sich mit deutlich geringeren Geschwindigkeiten und legen innerhalb vom Kamerabild nur wenige Pixel pro Aufnahmezyklus zurück. Überschreitet das detektierte Fremdobjekt also eine Maximalgeschwindigkeit, welche für Schweißfunken typisch ist, so lässt es sich relativ eindeutig als Schweißfunken identifizieren.

Die Bestimmung der Geschwindigkeiten der Fremdobjekte aus den Kamerabildern heraus, kann auf verschiedene Art und Weise erfolgen. Entweder geschieht dies in der Auswerteeinheit durch Vergleich von zeitlich aufeinanderfolgenden Kamerabildern miteinander. Dabei wird gemessen, welcher Weg das Fremdobjekt von einem Kamerabild zu dem anderen zurückgelegt hat. Gleichzeitig ist der zeitliche Abstand zwischen der Aufnahme der beiden Kamerabilder bekannt, so dass sich daraus die Geschwindigkeit des Fremdobjekts berechnen lässt. Allerdings erfordert dies, dass das Fremdobjekt zwischen den einzelnen Kamerabildern eindeutig nachverfolgt werden kann bzw. getrackt werden kann. Dies hat sich bei Schweißfunken jedoch als problematisch herausgestellt. Eine direkte Zuordnung eines identischen Schweißfunkens in Kamerabildern, welche zu unterschiedlichen Zeitpunkten aufgenommen wurden, ist relativ aufwändig. Das hat mehrere Gründe. Zum einen können die Fluggeschwindigkeiten so hoch sein und die zeitlichen Abstände der Aufnahmen soweit auseinanderliegen, dass der Schweißfunken nur in einem Bild auftritt. Zum anderen können die Funken instabil sein und in den nächsten Aufnahmen in mehrere Objekte zerfallen, so dass eine eindeutige Zuordnung nicht mehr möglich ist. Auf der anderen Seite ließe sich eine solche Erscheinung, nämlich, dass ein Schweißfunke nur in einem Bild, nicht aber in dem zeitlich darauffolgenden Bild erkennbar ist, als charakteristisches Erkennungsmerkmal verwenden.

In einer bevorzugten Ausgestaltung ist die Auswerteeinheit aber dazu eingerichtet, die Geschwindigkeit des Fremdobjekts anhand einer Beleuchtungszeit des Kamerasystems, einer detektierten Entfernung des Fremdobjekts und einer Anzahl an Pixel, welche das Fremdobjekt in dem Kamerabild einnimmt, zu bestimmen.

Die Bestimmung der Geschwindigkeit des Fremdobjekts lässt sich also vorzugsweise anhand nur eines Kamerabilds determinieren. Bei Schweißfunken gibt insbesondere die Form des im Kamerabild erzeugten Schweifs einen Rückschluss auf dessen Geschwindigkeit. Insbesondere spielt dabei die Länge des Schweißfunken-Schweifs eine Rolle. Je länger der im Kamerabild abgebildete Schweif ist, desto schneller bewegt sich der Schweißfunken. Ebenso hat die Beleuchtungszeit des Kamerasystems einen Einfluss auf die Länge des Schweifs. Eine weitere Einflussgröße ist der Abstand des Schweißfunkens von der Optik des Kamerasystems. Sind diese Einflussgrößen bekannt, lässt sich die Geschwindigkeit des Schweißfunkens sehr gut abschätzen.

In einer weiteren Ausgestaltung ist die Auswerteeinheit dazu eingerichtet, in zumindest einem der Kamerabilder einen räumlichen Grauwert-Verlauf im Bildbereich eines detektierten Fremdobjekts zu bestimmen, um anhand dessen zu bestimmen, ob es sich bei dem Fremdobjekt um einen Schweißfunken handelt.

Unter Grauwert-Verlauf wird hier ein räumlicher bzw. 2D-flächiger Grauwert-Verlauf innerhalb eines Kamerabilds verstanden, also der Vergleich der Grauwerte einzelner benachbarter Pixel zueinander. Die Auswerteeinheit kann also dazu ausgebildet sein, Grauwerte von Pixeln, die über dem oben genannten Grauwert-Schwellenwert liegen, mit den Grauwerten benachbarter Pixel zu vergleichen. Schweißfunken haben üblicherweise einen charakteristischen Helligkeitsverlauf in einem Kamerabild, welcher im Zentrum des Schweißfunkens am größten ist und nach außen hin abnimmt. Dieser Helligkeitsverlauf kommt bei Aufnahmesystemen zu tragen, dessen Kamera ein "verzögerndes Verhalten" zeigen. Pixel von CMOS-Kameras, wie diese für die vorliegende Anwendung vorzugsweise eingesetzt werden, bestehen neben einer Anzahl von Transistoren ebenfalls aus einem Kondensator, welcher Ladungen speichert und während des Lesevorgangs abgibt. Dieses Bauelement führt zu zeitlichen Verzögerungseffekten. Kurzzeitige Lichteffekte werden nicht zeitgleich auf dem Pixel abgebildet, sondern haben ein verzögerndes Verhalten. Aus diesem Grund wird bei einem bewegten Schweißfunken ein Schweif während der Aufnahme beobachtet. Je nach Aufbau des Pixels kommen diese Nachzieheffekte mehr oder weniger zustande. Deshalb können die vorgestellten Methoden auf Kamerasystemen mit ähnlichen temporären Eigenschaften übertragen werden.

Ein solcher Schweif in den Kamerabildern ist daher für den Schweißfunken charakteristisch. Schweißfunken haben in den Aufnahmen meist einen geradlinig Verlauf. Durch ihren Helligkeitsunterschied zum Hintergrund können die Grauwert-Gradienten und eine genaue Konturrichtung bestimmt werden. Entlang des Schweifes lässt sich eine fast exponentielle Abnahme in den Helligkeitswerten beobachten. Durch Auswertung der Grauwerte benachbarter Pixel, lässt sich also relativ genau feststellen, ob es sich um einen solchen charakteristischen Grauwert-Gradienten handelt und damit bei dem Fremdobjekt um einen Schweißfunken oder nicht.

Bevorzugt ist die Auswerteeinheit auch dazu eingerichtet, aus dem Grauwert-Verlauf eine Größe und/oder eine Form des Fremdobjekts abzuschätzen.

Anhand der Grauwerte lässt sich die Umrisskontur des Fremdobjekts relativ gut abgrenzen. Stellt die Auswerteeinheit fest, dass es sich um eine stabförmige Form handelt, welche die typische Größe eines Schweißfunkens aufweist, so wird das Fremdobjekt also Schweißfunken identifiziert und die sicherheitsrelevante Funktion nicht ausgelöst.

In einer weiteren bevorzugten Ausgestaltung ist die Auswerteeinheit ferner dazu eingerichtet, aus dem Grauwert-Verlauf eine Bewegungsrichtung und/oder einen Herkunftsort des Fremdobjekts abzuschätzen.

Dies ist aus obigen Überlegungen heraus bei Schweißfunken anhand ihres im Kamerabild auftretenden Schweifs relativ gut möglich. Der im Kamerabild auftretende Schweif eines Schweißfunkens ist üblicherweise in Flugrichtung gesehen im Bereich seines vorderen Endes am hellsten und nimmt ausgehend davon, entgegen seiner Flugrichtung, stetig ab. Der exponentielle Grauwert-Gradientenverlauf von benachbarten Bildpixeln, die den Schweif eines Schweißfunkens abbilden, gibt daher relativ gute Rückschlüsse über seine Flugrichtung. Aus der Flugrichtung wiederum lässt sich der Ursprung des Schweißfunkens, also dessen Herkunftsort, abschätzen. Die Auswerteeinheit kann also bspw. auch dazu eingerichtet sein, Fremdobjekte, denen anhand des Grauwert-Gradientenverlaufs ein bestimmter vordefinierter Herkunftsort zugeordnet wird, als Schweißfunken zu detektieren. Wenn sich aus dem Grauwert-Gradientenverlauf bspw. abschätzen lässt, dass das Fremdobjekt seine Herkunft direkt aus dem Schweißwerkzeug hat, kann mit großer Sicherheit gefolgert werden, dass es sich dabei um einen Schweißfunken handelt.

Es versteht sich, dass die Auswerteeinheit die Klassifizierung in Schweißfunken oder andere Fremdobjekte vorzugsweise anhand mehrerer oder aller oben genannter charakteristischer Merkmale vornimmt. Je mehr dieser charakteristischen Merkmale in die Auswertung der Auswerteeinheit mit einbezogen werden, desto sicherer lässt sich daraus folgen, ob es sich bei einem detektierten Fremdobjekt um einen Schweißfunken handelt oder nicht.

In einer weiteren Ausgestaltung ist die Auswerteinheit dazu eingerichtet, mittels Skelettierung anhand des Grauwert-Verlaufs eine Kontur des Fremdobjekts zu bestimmen, indem in zumindest einem Kamerabild eine Kette von benachbarten Pixeln ermittelt wird, welche Grauwerte über einem Grauwert-Schwellenwert aufweisen.

Eine solche Skelettierung ist insbesondere geeignet, um den durch ein Schweißfunken im Kamerabild erzeugten Schweif bzw. dessen Kontur zu rekonstruieren. Dabei wird eine Kette bzw. Aneinanderreihung von denjenigen Pixeln konstruiert, die die höchsten Grauwerte aufweisen. Diese Kette wird auch als Skelett bezeichnet. Eine solche Skelettierung zur Rekonstruktion des Schweißfunken-Schweifs dient insbesondere dazu, die Form des Schweifs im Kamerabild zu erfassen, um dann die vom Schweißfunken-Schweif überdeckten Pixel, wie oben erwähnt, durch Pixel vorangegangener Bilder von Referenzbildern, welche den Hintergrund zeigen, zu ersetzen. Bei der Skelettierung wird der Schweißfunken-Schweif innerhalb der Bildverarbeitung schrittweise abgetastet. Vorzugsweise wird dazu zunächst ein Startpixel bestimmt. Als Startpixel kann bspw. das Pixel mit dem höchsten Grauwert verwendet werden, welches über dem oben genannten Grauwert-Schwellenwert liegt. Ausgehend von diesem Startpixel werden dann alle acht benachbarten Pixel auf ihre Grauwerte überprüft und wiederum das Pixel selektiert, welches unter diesen den höchsten Grauwert aufweist. Das Skelett wird so iterativ pixelweise zusammengesetzt, bis entweder eine vordefinierte Maximallänge erreicht wird (erstes Abbruchkriterium) oder der Schweif bezüglich der Helligkeit/des Grauwerts sich nicht mehr vom Bildhintergrund unterscheidet. Ausgehend von dem hellen Zentrum des Schweißfunken-Schweifs entsteht somit eine Kette einzelner Pixel (Skelett) entlang des Schweifs. Die Auswerteeinheit kann dann aus dem Skelett eine Länge des Fremdobjekts berechnen und anhand dieser Länge bestimmen, ob es sich bei dem Fremdobjekt um einen Schweißfunken handelt oder nicht. Das Ergebnis der Skelettierung kann dann auch dazu verwendet werden, um die Bewegungsrichtung des Fremdobjekts bzw. des Schweißfunkens zu bestimmen.

In einer weiteren Ausgestaltung ist die Auswerteeinheit dazu eingerichtet, zur Skelettierung die Grauwerte der Pixel in Gruppen zusammenzufassen.

Dies dient insbesondere der Vermeidung von Irrwegen während der Skelettierung. Um nicht durch lokale Diskontinuitäten im Graubild den generellen Verlauf des Skelettes zu verlieren, muss die Kontur mit robusten Methoden gefunden werden. Daher ist es vorteilhaft für die schrittweise Konstruktion des Skeletts nicht Grauwerte einzelner Pixel zu vergleichen, sondern die Grauwerte in Pixelgruppen zusammenzufassen. Hierdurch kann insbesondere der Einfluss von Rauschen vermindert werden. Vorzugsweise fasst die Auswerteeinheit dazu die Grauwerte von drei Pixeln in jeweils eine Pixelgruppe zusammen. Die Auswerteeinheit verwendet dann die Pixel-Dreier-Gruppe, welche die höchste Grauwertsumme oder den höchsten Grauwert-Mittelwert aufweist, um das Skelett um einen Pixel zu erweitern. Dies wird anhand der nachfolgenden Figuren weiter verdeutlicht.

In einer weiteren Ausgestaltung ist die Auswerteeinheit dazu eingerichtet, zeitlich aufeinanderfolgende Bilder miteinander zu vergleichen.

Die Auswerteeinheit ist dabei vorzugsweise dazu eingerichtet, Bildregionen der erfassten Kamerabilder, in welchen ein Fremdobjekt detektiert wurde, mit der entsprechenden Bildregion in zumindest einem zeitlich vorangegangenen Kamerabild zu vergleichen, um festzustellen, ob das Fremdobjekt auch in der entsprechenden Bildregion des vorangegangenen Kamerabilds lokalisiert wurde.

Wie oben bereits erwähnt, ist eine der charakteristischen Eigenschaften von Schweißfunken deren hohe Geschwindigkeit. Daraus leitet sich ab, dass für die Schweißfunkendetektion mitentscheidend ist, ob in der vorangegangenen Aufnahme in derselben Bildregion schon ein Funke detektiert wurde. Wenn dem nicht so ist, dann hat der Funke die Maximalgeschwindigkeit überschritten und es handelt sich nicht um eine Person oder Maschine. Befand sich allerdings schon im Vorgängerbild ein schweißfunkenähnliches Objekt, dann kann nicht ausgeschlossen werden, dass es sich doch um ein anderes relevantes Objekt handelt. Der Vergleich von zeitlich aufeinanderfolgender Bilder hilft daher, die Klassifizierungs-Sicherheit, ob es sich um einen Schweißfunken handelt oder nicht, zusätzlich zu erhöhen.

In einer bevorzugten Ausgestaltung ist das Kamerasystem ein mehrkanalig-redundantes, multiokulares Kamerasystem, das dazu eingerichtet ist, einen Entfernungswert zu ermitteln, der für die räumliche Lage von dem Fremdobjekt repräsentativ ist, wobei der Entfernungswert durch ein Laufzeitmessverfahren und/oder durch einen stereoskopischen Vergleich zweier zeitgleicher Kamerabilder ermittelt wird.

Ein solches Kamerasystem ist in der EP 1 543 270 B1 beschrieben, deren Offenbarungsgehalt hier durch Bezugnahme vollumfänglich aufgenommen ist. Ein solches Kamerasystem wird von der Anmelderin unter dem Namen SafetyEYE vertrieben.

Bei einem Laufzeitmessverfahren wird die Laufzeit eines Signals, insbesondere eines Lichtsignals, zu einem Fremdobjekt und zurückgemessen. Aus der bekannten Ausbreitungsgeschwindigkeit des Signals lässt sich die Entfernung zu dem Fremdobjekt bestimmen. Laufzeitmessverfahren sind eine sehr kostengünstige Möglichkeit, um Entfernungsinformationen zu gewinnen und eine dreidimensionale Bildauswertung zu ermöglichen.

Stereoskopische Verfahren zur Bestimmung von Entfernungsinformationen ähneln der Funktionsweise des menschlichen Auges, indem sie die Entfernung zu einem Objekt anhand der sog. Disparität bestimmen, die sich in den zumindest Zweikamerabildern aufgrund der leicht unterschiedlichen Blickwinkel ergibt. Es versteht sich, dass diese Ausgestaltung auch trinokulare Verfahren und Vorrichtungen einschließt, d.h. diese Ausgestaltung ist nicht auf die Verwendung von genau zwei Kameras bzw. zwei Kamerabildern beschränkt. Die dreidimensionale Überwachung eines Überwachungsbereichs mit Hilfe eines stereoskopischen Verfahrens eignet sich für die bevorzugte Anwendung besonders gut, weil redundante Systeme in Bezug auf die Ein-Fehler-Sicherheit vorteilhaft sind. Ein stereoskopisches System kann die mehrfach vorhandenen Kameras bzw. Bildaufnahmeeinheiten optimal nutzen.

Es versteht sich, dass sich die oben genannten Ausgestaltungen nicht nur auf die in den Patentansprüchen definierte Vorrichtung beziehen, sondern sich auch auf das unter Schutz gestellte Verfahren beziehen. Das neue Verfahren hat demnach gleiche oder ähnliche Ausgestaltungen wie die neue Vorrichtung.

Ebenso versteht es sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer erfindungsgemäßen Vorrichtung;
- Fig. 2: eine vereinfachte Darstellung der erfindungsgemäßen Vorrichtung in einem Blockdiagramm;
- Fig. 3: eine Skizze zur Erläuterung einer bevorzugten Anwendung der erfindungsgemäßen Vorrichtung;
- Fig. 4: eine schematische Darstellung zweier Kamerabilder, welche von der erfindungsgemäßen Vorrichtung erzeugt und analysiert werden;
- Fig. 5: eine perspektivische Darstellung eines Kamerasystems, welches in der erfindungsgemäßen Vorrichtung zum Einsatz kommen kann, von schräg unten;
- Fig. 6: eine beispielhafte Darstellung eines durch einen Schweißfunken in einem Kamerabild erzeugten Schweifs;
- Fig. 7: eine Grauwert-Auswertung eines Kamerabilds zweier Schweißfunken;
- Fig. 8: eine schematische Darstellung zur Veranschaulichung eines innerhalb der erfindungsgemäßen Vorrichtung implementierbaren Skelettierungs-Verfahrens;
- Fig. 9: ein vereinfachtes Flussdiagramm zur Erläuterung des erfindungsgemäßen Verfahrens gemäß einer ersten Ausführungsform; und
- Fig. 10: ein vereinfachtes Flussdiagramm zur Erläuterung des erfindungsgemäßen Verfahrens gemäß einer zweiten Ausführungsform.

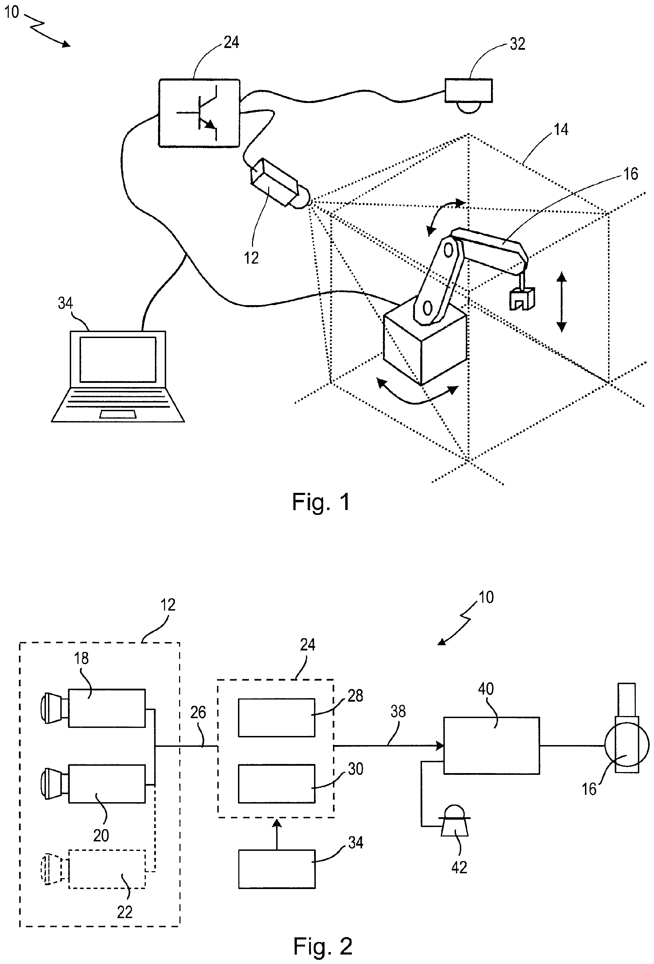

In den Figuren 1 und 2 ist ein bevorzugtes Ausführungsbeispiel der neuen Vorrichtung in seiner Gesamtheit mit der Bezugsziffer 10 bezeichnet.

Die Vorrichtung 10 beinhaltet zumindest ein Kamerasystem 12, das dazu ausgebildet ist, einen Raumbereich bzw. Überwachungsbereich 14 zu überwachen, in dem eine automatisiert arbeitende Anlage oder Maschine, hier ein Roboter 16, angeordnet ist. Das Kamerasystem 12 ist dazu auf den Überwachungsbereich 14 ausgerichtet.

Das Kamerasystem 12 ist vorzugsweise als ein mehrkanalig-redundantes, multiokulares Kamerasystem mit zumindest zwei Bildaufnahmeeinheiten 18, 20, vorzugsweise auch noch mit einer dritten Bildaufnahmeeinheit 22, ausgestaltet. Die Bildaufnahmeeinheiten 18, 20, 22 können komplette, eigenständig funktionsfähige Kameras sein. Vorzugsweise handelt es sich dabei um Kameras, welche mit CMOS- oder CCD-Sensoren ausgestattet sind. Insbesondere kann es sich bei den Bildaufnahmeeinheiten 18, 20, 22 um katadioptrische Kameras handelt, d.h. um Kameras, die gewölbte Spiegel als bildgebende Elemente einsetzen, um ein ringförmiges Blickfeld rings um einen in Verlängerung ihrer optischen Achse liegenden toten Winkel haben.

Die Kameras 18, 20, 22 liefern zwei bzw. drei leicht zueinander versetzte Bilder von dem abzusichernden Überwachungsbereich 14. Aufgrund des Versatzes der Kameras 18, 20, 22 zueinander und mit Hilfe trigonometrischer Beziehungen, kann die Entfernung von dem Kamerasystem 12 zu Objekten in dem Überwachungsbereich 14 anhand der Kamerabilder bestimmt werden. Ein bevorzugtes Kamerasystem dieser Art ist in der eingangs erwähnten EP 1 543 270 B1 beschrieben. In anderen Ausführungsbeispielen kann das Kamerasystem 12 eine Laufzeitkamera beinhalten. Hierunter ist eine Kamera zu verstehen, die einerseits 2D-Bilder eines zu überwachenden Bereichs liefert. Darüber hinaus liefert die Kamera Entfernungsinformationen, die aus einer Laufzeitmessung gewonnen werden. Das Kamerasystem 12 kann ebenso dazu ausgebildet sein, als 3D-Scanner zu fungieren und/oder eine andere Technologie verwenden, die es ermöglicht, 3D-Bilder von dem abzusichernden Überwachungsbereich 14 zu erzeugen.

Darüber hinaus können in anderen Ausführungsbeispielen mehrere 1D- und/oder 2D-Sensoren paarweise und/oder als Gesamtheit eine 3D-Sensoreinheit bilden, die die benötigten 3D-Bilder von dem Überwachungsbereich 14 liefert. Es ist also nicht zwingend erforderlich, wenngleich bevorzugt, ein Stereokamerasystem 12 für die Vorrichtung 10 zu verwenden.

Das Kamerasystem 12 ist mit einer Steuerung 24 verbunden. Dies erfolgt vorzugsweise über einen Bus 26. Anstelle einer räumlich abgesetzten Steuerung 24 ist es alternativ dazu auch möglich, die Bildaufnahmeeinheiten bzw. Kameras 18, 20, 22 und die Steuerung 24 in einem gemeinsamen Gehäuse zu integrieren, oder eine sonstige analoge oder digitale Schnittstelle zu verwenden. Die vorliegend dargestellte Anordnung mit einer räumlich getrennten Steuerung 24 besitzt die Vorteile eines modularen Systems, wie geringes Gewicht der Einzelkomponenten, separate Austauschbarkeit, etc.

Die Steuerung 24 weist vorzugsweise eine Auswerteeinheit 28 auf. Diese Auswerteeinheit 28 ist dazu eingerichtet, die von dem Kamerasystem 12 aufgenommenen Kamerabilder auszuwerten und im Falle einer gefährlichen Situation eine sicherheitsrelevante Funktion, vorzugsweise ein Abschaltsignal auszulösen, welches zu einem Abschalten des Roboters 16 führt. Die Steuerung 24 weist vorzugsweise noch eine Bildkorrektur-Einheit 30 auf, deren Funktion nachfolgend noch erläutert wird. Die Auswerteeinheit 28 und die Bildkorrektur-Einheit 30 können entweder als separate Einheiten, sowohl Software- als auch Hardware-basiert realisiert sein. Alternativ dazu können diese beiden Einheiten 28, 30 auch in einer gemeinsamen Software- oder Hardware-basierten Einheit innerhalb der Steuerung 24 realisiert sein. Die in Fig. 1 und 2 gezeigten Verbindungen zwischen Kamerasystem 12, Steuerung 24 und Maschine 16 können jeweils als kabelgebundene oder kabellose Verbindungen ausgestaltet sein. In einem bevorzugten Ausführungsbeispiel handelt es sich bei der Steuerung 24 um einen herkömmlichen Computer, auf dem eine Software installiert ist, die die Auswerteeinheit 28 und die Bildkorrektur-Einheit 30 implementiert.

Mit der Bezugsziffer 32 ist in Fig. 1 eine Lichtquelle bezeichnet, die optional dazu vorgesehen sein kann, den Überwachungsbereich 14 zu beleuchten. In manchen Ausführungsbeispielen der Erfindung kann die Lichtquelle 32 dazu dienen, Lichtsignale zu erzeugen, aus deren Laufzeit die Entfernung zu Objekten im Überwachungsbereich 14 ermittelt werden kann. In den bevorzugten Ausführungsbeispielen dient die Lichtquelle 32 jedoch lediglich zur Beleuchtung des Überwachungsbereichs. Eine 3D-Erfassung des Überwachungsbereichs 14 erfolgt, wie oben bereits erwähnt, vorzugsweise mit Hilfe einer stereoskopischen Bildaufnahme.

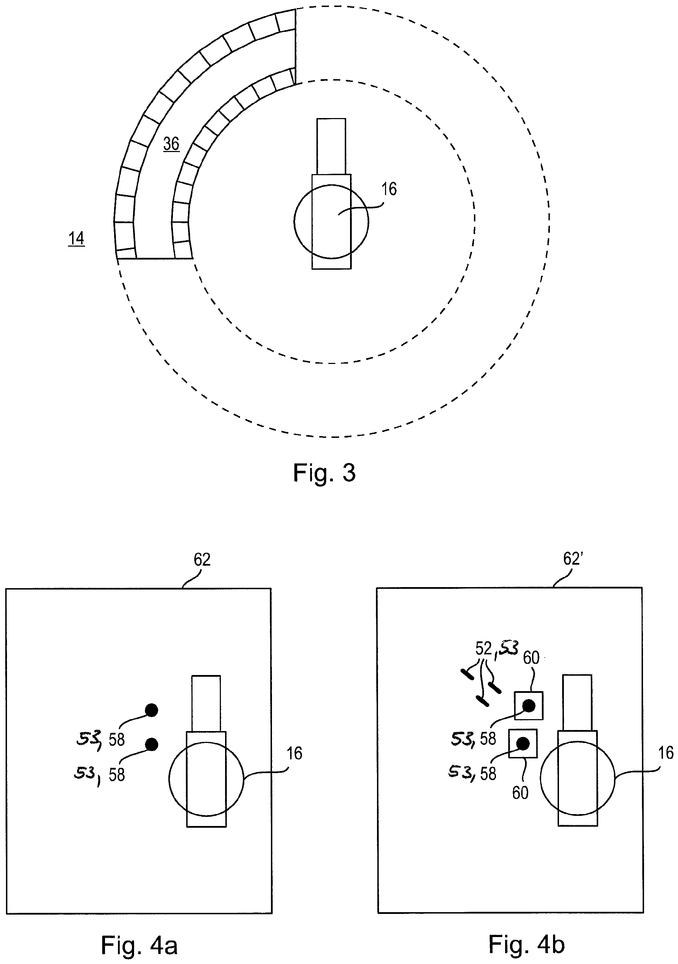

Des Weiteren zeigen Fig. 1 und 2 schematisch noch ein Eingabemodul 34, welches vorliegend auch als Konfigurationseinheit 34 bezeichnet wird. Die Konfigurationseinheit 34 kann zur Installation und Konfiguration der Vorrichtung 10, insbesondere des Kamerasystems 12, verwendet werden. Sie dient, wie nachfolgend noch im Detail erläutert wird, insbesondere der Einstellung und Konfiguration zumindest eines virtuellen Schutzbereichs 36 (siehe Fig. 3). Die Konfigurationseinheit bzw das Eingabemodul 34 kann als spezielles Eingabe-Panel auf die Vorrichtung 10 angepasst sein. Alternativ dazu kann dieses aber auch durch einen herkömmlichen Computer realisiert sein, auf dem eine Software installiert ist, die sich zur Installation und Konfiguration der Vorrichtung 10 eignet. Die Steuerung 24 samt Auswerteeinheit 28 und Bildkorrektur-Einheit 30 sowie die Konfigurationseinheit 34 können entweder als zwei separate herkömmliche Computer realisiert sein. Alternativ dazu können die Steuerung 24 und die Konfigurationseinheit 34 auch kombiniert durch einen Computer realisiert sein.

Des Weiteren sei noch erwähnt, dass die Vorrichtung 10 auch mehrere Steuerungen 24 bzw. Auswerteeinheiten 28 beinhalten kann, die über einen Bus oder ein anderes Kommunikationsmedium miteinander verbunden sind. Darüber hinaus ist es möglich, dass ein Teil der Signal- und Datenverarbeitungsleistung des Kamerasystems 12 in der Steuerung 24 bzw. der Auswerteeinheit 28 untergebracht ist. Beispielsweise kann die Bestimmung der Position eines Objekts anhand der Stereobilder der Kameras 18, 20, 22 in einem Rechner erfolgen, der auch die Auswerteeinheit 28 implementiert. Auch die einzelnen Kameras bzw. Bildaufnahmeeinheiten 18, 20, 22 des Kamerasystems 12 müssen nicht zwingend in einem einzigen Gehäuse untergebracht sein. Vielmehr kann das Kamerasystem 12 im Sinne der Erfindung auch auf mehrere Baugruppen und/oder Gehäuse verteilt sein, wenngleich es bevorzugt ist, das Kamerasystem 12 so kompakt wie möglich zu realisieren.

Wie bereits erwähnt, erfolgt die Auswertung der einzelnen Kamerabilder in der Auswerteeinheit 28. Diese Auswerteeinheit 28 wertet insbesondere aus, ob ein Fremdobjekt in dem virtuellen Schutzbereich 36 vorhanden ist oder in diesen eindringt. Wird ein solches Fremdobjekt von der Auswerteeinheit 28 erkannt, so erzeugt diese ein sog. OSSD-Signal 38 (Optical Safety Switching Device Signal). Dieses Signal wird vorzugsweise an eine Sicherheitssteuerung 40 weitergegeben, welche die Maschine 16 daraufhin abschaltet oder in einen sicheren Zustand bringt. Zudem kann ein Not-Aus-Taster 42 an diese Sicherheitssteuerung 40 angeschlossen sein, welche es einem Bediener erlaubt, die Maschine 16 durch Betätigen dieses Not-Aus-Tasters 42 manuell abzuschalten. Bei dem Not-Aus-Taster 42 kann es sich auch um eine Schutztür handeln, bei deren Öffnen die Maschine 16 abgeschaltet wird.

Die Sicherheitssteuerung 40 beinhaltet vorzugsweise Relais oder Schütze. Mit der Sicherheitssteuerung 40 können die Antriebe der überwachten Maschine 16 in an sich bekannter Weise abgeschaltet werden. Die Sicherheitssteuerung 40 kann bspw. auch in Form einer fehlersicheren SPS (Speicher programmierbaren Steuerung) realisiert sein. In diesem Fall ist es bevorzugt, wenn die Auswerteeinheit 28 bzw. die Steuerung 24 über einen sicheren Feldbus, bspw. den sog. SafetyBus® der Pilz GmbH & Co., Deutschland, mit der Sicherheitssteuerung 40 verbunden ist. Bei der Sicherheitssteuerung 40 handelt es sich bspw. um eine PSS 3000 der Firma Pilz GmbH & Co, Deutschland.

Um dieses OSSD-Signal zu erzeugen, wertet die Auswerteeinheit 28 die von den Kameras 18, 20, 22 gelieferten Kamerabilder mittels verschiedenster Bildverarbeitungsmethoden aus. Zunächst erfolgt dazu in der Auswerteeinheit 28 eine sog. Bildvorverarbeitung. Je nach Anwendung werden hier an sich bekannte Verfahren zur Aufbereitung der aufgenommenen Kamerabilder durchgeführt, bspw. eine FPN-Korrektur (Fixed Pattern Noise). Des Weiteren werden die aufgenommenen Kamerabilder im Hinblick auf Grundhelligkeiten etc. aneinander angepasst. Anschließend erfolgt die eigentliche Auswertung der Kamerabilder, bspw. mit Hilfe zweier verschiedenen Szenenanalyseverfahren, um Fremdobjekte innerhalb des Überwachungsbereichs 14 zu detektieren. Innerhalb dieser Szeneanalyseverfahren kann die Auswerteeinheit 28 eine konturbasierte Bildanalyse ausführen, welche eine Regionensegmentierung, d.h. eine Einteilung der Kamerabilder in einzelne zu vergleichende Bereiche, beinhaltet. Bevorzugt werden dann nur Bildbereiche ausgewertet, die sich von einem Referenzbild signifikant unterscheiden. Anhand der Ergebnisse der Szenenanalysen wird innerhalb der Auswerteeinheit 28 ausgewertet, ob eine Schutzraumverletzung vorliegt, d.h. ob ein Objekt unzulässigerweise in den Überwachungsbereich 14 eingedrungen ist. Diese Auswertung bzw. Überprüfung muss nicht notwendigerweise für den gesamten Überwachungsbereich 14 erfolgen. Vorzugsweise erfolgt dies nur für Teilbereiche des Überwachungsbereichs 14. Hierzu wird mit Hilfe der Konfigurationseinheit bzw. des Eingabemoduls 34 zumindest ein virtueller, dreidimensionaler Schutzbereich 36 innerhalb des Überwachungsbereichs 14 definiert (siehe Fig. 3). Dieser Schutzbereich 36 wird vorzugsweise ringsherum um die Maschine 16 definiert. Form und Größe des Schutzbereichs 36 sowie Abstand des Schutzbereichs 36 von der Maschine 16 lassen sich je nach Anforderung individuell einstellen. Dies erfolgt vorzugsweise Software-gestützt manuell oder automatisiert. Selbstverständlich lassen sich auch mehrere Schutzbereiche 36 um die Maschine 16 herum einrichten. Beispielsweise lässt sich zusätzlich ein weiter außenliegender Warnbereich (nicht dargestellt) einrichten. In einem solchen Fall ist die Auswerteeinheit 28 dazu eingerichtet, bei Detektion eines Fremdobjekts im Warnbereich lediglich ein Warnsignal auszugeben, wodurch bspw. ein Warnton oder ein visuelles Warnsignal erzeugt wird. Bei Detektion eines Fremdobjekts innerhalb des Schutzbereichs 36 erzeugt die Auswerteeinheit 28 dann allerdings ein Abschaltsignal, was in oben definierter Weise ein Abschalten der Maschine 16 zur Folge hat bzw. die Maschine 16 in einen sicheren Zustand bringt.

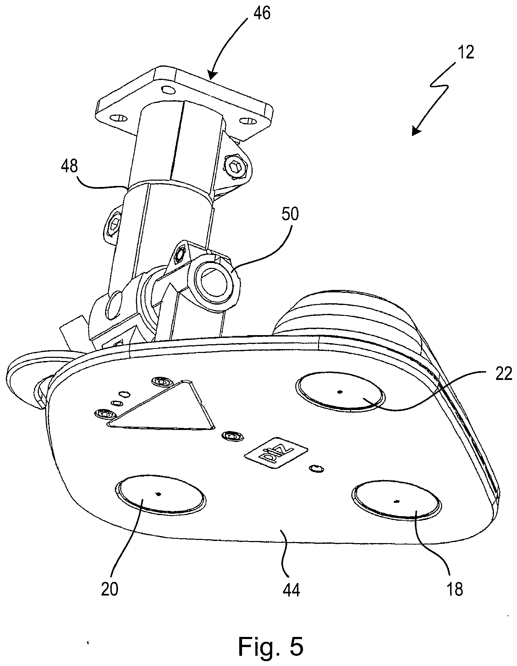

Fig. 5 zeigt eine bevorzugte Ausführungsform einer Sensoreinheit des Kamerasystems 12, wie sie von der Anmelderin unter dem Namen SafetyEYE vertrieben wird. Wie bereits erläutert, gehören zu dem Gesamtsystem neben dem Kamerasystem 12 üblicherweise auch noch die Auswerteeinheit 28 sowie die Sicherheitssteuerung 40, wie dies in den Fig. 1 und 2 gezeigt ist. Gemäß dieser Ausführungsform weist das Kamerasystem 12 einen Systemkörper 44 auf, welcher in Form einer weitgehend ebenen Platte ausgestaltet ist. Diese Platte 44 hat hier eine in etwa rautenförmige Grundfläche. In drei der vier "Ecken" des Systemkörpers 44 sind die drei Bildaufnahmeeinheiten 18, 20, 22 angeordnet. Mit der Bezugsziffer 46 ist ein Montageteil bezeichnet, mit dessen Hilfe das Kamerasystem an einer Wand, einem Masten oder dergleichen (hier nicht dargestellt) befestigt werden kann. Das Montageteil 46 ist hier ein Montagearm mit mehreren Drehgelenken 48, 50, die ein Verschwenken des Systemkörpers 44 um zumindest zwei zueinander orthogonale Drehachsen ermöglichen. Vorzugsweise lässt sich der Systemkörper 44 auch noch um eine dritte, dazu orthogonale Drehachse verschwenken. Das zugehörige Drehgelenk ist in der Ansicht von Fig. 5 jedoch verdeckt. Die Bildaufnahmeeinheiten 18, 20, 22 lassen sich somit relativ einfach auf den zu überwachenden Überwachungsbereich 14 ausrichten. Die drei Bildaufnahmeeinheiten 18, 20, 22 spannen an dem Systemkörper 44 ein Dreieck auf. Die durch diese erzeugten Kamerabilder sind somit leicht versetzt zueinander. Die Bildaufnahmeeinheiten 18, 20 bzw. 18, 22 bilden jeweils ein Paar, wobei die Entfernung der Bildaufnahmeeinheiten 18, 20 voneinander und die Entfernung der Bildaufnahmeeinheiten 18, 22 voneinander in diesem Ausführungsbeispiel jeweils exakt gleich und unveränderlich sind. Diese beiden Entfernungen bilden jeweils eine Basisweite für eine stereoskopische Auswertung der Bildaufnahmeeinheiten 18, 20 und 18, 22. Prinzipiell könnten darüber hinaus auch die Bildaufnahmeeinheiten 20, 22 als Paar für eine separate stereoskopische Auswertung verwendet werden. Dadurch, dass die beiden stereoskopischen Bildaufnahmeeinheiten-Paare 18, 20 und 18, 22 nicht entlang einer gemeinsamen Geraden angeordnet sind, lassen sich auch Objekte in dem Überwachungsbereich 14 detektieren, die für ein einzelnes Kamerapaar nicht sichtbar sind, bspw. aufgrund von Abschattungen durch andere Objekte. Außerdem wird mit Hilfe der drei Bildaufnahmeeinheiten 18, 20, 22 sichergestellt, dass die Entfernung zu beliebigen Objekten im Überwachungsbereich bestimmt werden kann. Wenn lediglich zwei Bildaufnahmeeinheiten verwendet würden, könnte die Entfernung zu einer parallel zur Basisweite verlaufenden, langgestreckten Kontur möglicherweise nicht bestimmt werden.

Die erfindungsgemäße Vorrichtung ist insbesondere auf die Überwachung von Schweißwerkzeugen oder Schweißrobotern spezialisiert. Bei solchen Schweißrobotern entstehen, je nach Abnutzung der Schweißwerkzeuge, eine Vielzahl von Schweißfunken, welche sich von der Schweißstelle aus in alle Richtungen ausbreiten. Bei bisher bekannten Kamerasystemen der oben genannten Art, würden diese Schweißfunken als Fremdobjekte erkannt werden, so dass es dann zu einer ungewollten Abschaltung der Maschine 16 kommt. Dies führt zu unerwünschten Stillständen der Produktionsanlage und damit zu Produktionsausfällen, die es zu vermeiden gilt. Die erfindungsgemäße Vorrichtung 10 vermeidet solche unerwünschten Stillstände durch ein geschicktes Erkennen der Schweißfunken innerhalb der Kamerabilder und ein entsprechendes Herausfiltern dieser Schweißfunken aus den Kamerabildern. Dieser Vorgang wird erfindungsgemäß durch die Auswerteeinheit 28 ausgeführt. Die Auswerteeinheit 28 ist dazu eingerichtet, ein in dem zumindest einen Schutzbereich 36 vorhandenes oder in diesen eindringendes Fremdobjekt 53 durch Analyse der Kamerabilder zu klassifizieren, um anhand eines oder mehrerer für Schweißfunken charakteristischer Merkmale zu bestimmen, ob es sich dabei um einen Schweißfunken handelt, oder um ein andersartiges Fremdobjekt. In Abhängigkeit dieser Klassifizierung löst die Auswerteeinheit 28 nur dann die sicherheitsrelevante Funktion (z.B. ein Abschaltsignal) aus, wenn das detektierte Fremdobjekt nicht als Schweißfunken erkannt wird.

Es hat sich herausgestellt, dass Schweißfunken charakteristische Merkmale aufweisen, die sich mit Methoden der Objekterkennung von der Auswerteeinheit 28 detektieren lassen.

Zu den charakteristischen Merkmalen der Schweißfunken zählen: deren Geschwindigkeit, deren Größe im Kamerabild, deren Gestalt und Form im Kamerabild, deren Helligkeits- bzw. Grauwerte, die sie im Kamerabild erzeugen, sowie deren räumlich im Kamerabild auftretende Helligkeits- bzw. Grauwert-Verlauf. Die Auswerteeinheit 28 ist daher vorzugsweise dazu eingerichtet, die oben genannte Klassifizierung anhand eines dieser Merkmale oder einer Kombination dieser für Schweißfunken charakteristischer Merkmale vorzunehmen.

Die Geschwindigkeit kann von der Auswerteeinheit 28 auf verschiedene Art und Weise gemessen werden. Zum Einen kann dies anhand eines Vergleichs zweier zeitlich aufeinanderfolgender Kamerabilder erfolgen. Hierbei wird durch die Auswerteeinheit, bspw. durch Einzelpixelvergleich, gemessen, welchen Weg das Fremdobjekt von einem Kamerabild auf das zeitlich nachfolgende Kamerabild zurückgelegt hat. Die genaue Distanzabmessung kann anhand des oben genannten stereoskopischen Auswertungsverfahrens erfolgen. Mit Hilfe des bekannten zeitlichen Abstands zwischen den beiden verglichenen Kamerabildern lässt sich dann die Geschwindigkeit des Fremdobjekts berechnen. Versuche der Anmelderin haben jedoch gezeigt, dass ein Tracking einzelner Schweißfunken über eine Sequenz mehrerer Kamerabilder aufgrund deren sehr hoher Geschwindigkeiten relativ schwierig ist. In einer bevorzugten Ausführungsform wird die Geschwindigkeit eines solchen Schweißfunkens durch die Auswerteeinheit 28 daher folgendermaßen ermittelt. Aufgrund der Trägheit der im Kamerasystem 12 vorzugsweise verwendeten CMOS-Sensoren erscheinen die Schweißfunken 52 in den einzelnen Kamerabildern als ein Schweif.

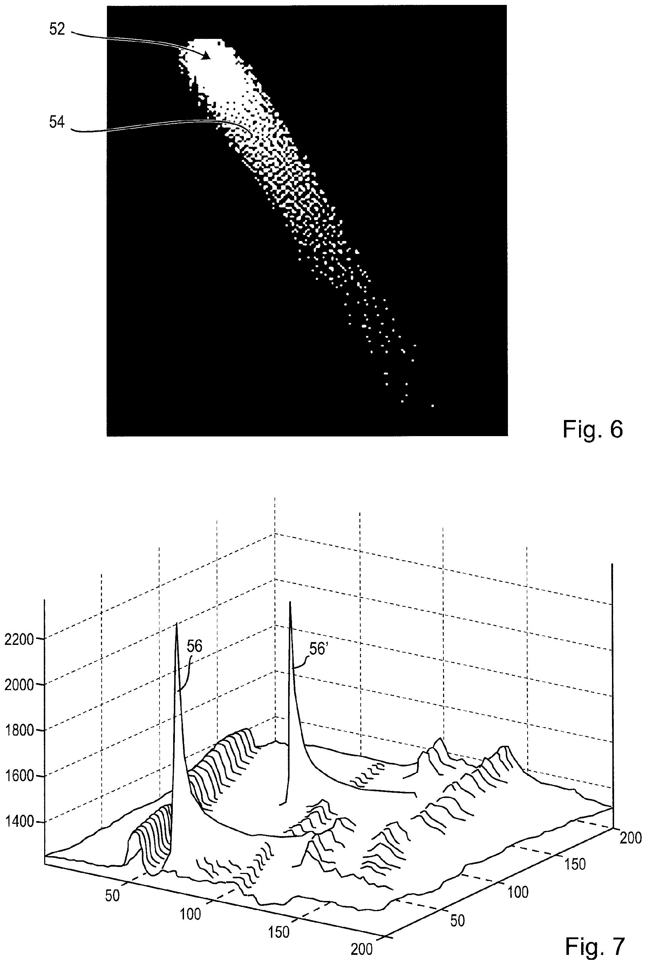

Ein solcher Schweißfunke 52 ist mit dem im Kamerabild entstehenden Schweif 54 in Fig. 6 beispielhaft dargestellt. Die Erscheinung eines solchen Schweifs 54 lässt Rückschlüsse zu, welche in der Auswerteeinheit 28 zur Bestimmung der Geschwindigkeit des Schweißfunkens 52 verwendet werden können. Die Form und Länge des Schweißfunkens hängt nämlich zum einen von dessen Geschwindigkeit und zum anderen von der Beleuchtungszeit des Kamerasensors ab. Je höher dessen Fluggeschwindigkeit ist und je länger die Beleuchtungszeit des Sensors ist, umso länger ist auch der Schweif 54. Als weiterer Faktor, den es zur Bestimmung der Geschwindigkeit des Schweißfunkens 52 zu beachten gilt, ist der Abstand zwischen Schweißfunken und dem Kamerasystem 12. Die Auswerteeinheit 28 ist also vorzugsweise dazu eingerichtet, die Geschwindigkeit des Schweißfunkens 52 anhand der Beleuchtungszeit des Kamerasystems 12, der detektierten Entfernung des Schweißfunkens sowie der Länge des Schweißfunken-Schweifs 54 zu bestimmen.

Unabhängig davon anhand welcher der beiden oben genannten Methoden die Geschwindigkeit eines Fremdobjekts aus den Kamerabildern ermittelt wird, lässt sich dadurch eindeutig bestimmen, ob es sich bei dem Fremdobjekt um einen Schweißfunken 52 handelt oder nicht. Dies geschieht in der Auswerteeinheit 28 vorzugsweise durch Vergleich der ermittelten Geschwindigkeit mit einem Geschwindigkeits-Schwellenwert. Der Geschwindigkeits-Schwellenwert ist dabei vorzugsweise so definiert, dass dieser nur von Schweißfunken 52, nicht aber von sicherheitsrelevanten Objekten oder Subjekten wie Maschinenteilen oder menschlichen Körperteilen überschritten werden kann.

Alternativ zu oben genannter Geschwindigkeitsermittlung lässt sich die Klassifizierung in Schweißfunken und übrige sicherheitsrelevante Fremdobjekte noch auf eine dritte Weise ermitteln. Die Auswerteeinheit 28 kann auch dazu eingerichtet sein, bei Detektion eines Fremdobjekts die Bildregion, in welcher das Fremdobjekt detektiert wurde, mit der entsprechenden Bildregion in einem zeitlich vorangegangenen Kamerabild zu vergleichen. Wurde in der entsprechenden Bildregion in dem zeitlich vorangegangenen Kamerabild kein solches Fremdobjekt erkannt, so übersteigt die Geschwindigkeit des Fremdobjekts mit hoher Wahrscheinlichkeit den definierten Geschwindigkeits-Schwellenwert, woraus gefolgert werden kann, dass es sich bei dem Fremdobjekt um einen Schweißfunken 52 handelt.

In Fig. 4 sind zwei solche zeitlich aufeinanderfolgende Kamerabilder 62, 62' schematisch dargestellt. Das in Fig. 4b schematisch gezeigte Kamerabild 62' folgt dabei zeitlich auf das in Fig. 4a schematisch dargestellte Kamerabild 62. In der schematisch dargestellten Situation hat die Auswerteeinheit 28 zwei Fremdobjekte 53 in dem ersten Kamerabild 62 detektiert. Anhand des Vergleichs der entsprechenden Bildregion im zeitlich darauffolgenden Kamerabild 62' (siehe Fig. 4b), stellt sich heraus, dass an der detektierten Stelle auch in diesem Bild die Fremdobjekte 53 detektierbar sind. Nach oben erwähnter Logik werden diese dann als sicherheitsrelevante Fremdobjekte 58 klassifiziert, was in Fig. 4b durch ein Rechteck 60 gekennzeichnet ist, das die Fremdobjekte 58 umgibt. Die im Bildbereich weiter links oben auftauchenden Fremdobjekte 53 im Kamerabild 62' wurden im vorangegangenen Kamerabild 62 jedoch nicht detektiert. Dies spricht nach oben erwähnter Logik dafür, dass es sich bei diesen Objekten 53 um Schweißfunken 52 handelt, welche den Geschwindigkeits-Schwellenwert überschreiten.

Aufgrund der üblicherweise sehr hohen Helligkeits- bzw. Grauwerte, die ein solcher Schweißfunken 52 im Kamerabild erzeugt, lässt sich auf einfache Weise auch dessen Größe bestimmen, da dieser sehr eindeutig von dem Hintergrund im Kamerabild abgrenzbar ist. Die Auswerteeinheit 28 kann also auch dazu eingerichtet sein, die Größe des Fremdobjekts 53 zu bestimmen und die so ermittelte Größe, mit einem Größen-Schwellenwert zu vergleichen. Unterschreitet die ermittelte Größe diesen Größen-Schwellenwert, so kann auch hieraus gefolgert werden, dass es sich bei dem detektierten Fremdobjekt 53 um einen Schweißfunken 52 handeln muss. Ein weiteres Charakteristikum ist die Form eines solchen Schweißfunkens 52. Wie in Fig. 6 ersichtlich, hat dieser in einem Kamerabild üblicherweise eine stabförmige Gestalt. Zusammen mit der identifizierten Größe ist auch dies ein Indikator dafür, ob es sich bei dem detektierten Fremdobjekt 53 um einen Schweißfunken 52 oder um ein sicherheitsrelevantes Objekt 58 handelt.

Aufgrund der hohen Hitze von Schweißfunken 52 weisen diese im Kamerabild sehr hohe Grauwerte auf. Zur Identifikation der Schweißfunken 52 lassen sich die Grauwerte eines identifizierten Fremdobjekts, also entweder pixelweise oder in Gruppen von Pixeln (z.B. Summe der Grauwerte einer Pixelgruppe oder arithmetisches Mittel der Grauwerte einer Pixelgruppe) mit einem Grauwert-Schwellenwert vergleichen, welcher von sonstigen Fremdobjekten üblicherweise nicht überschritten wird.

Ein weiteres Merkmal, welches sich als guter Indikator für die Erkennung eines Schweißfunkens 52 herausgestellt hat, ist dessen charakteristischer räumlicher Grauwert-Verlauf, welchen dieser in einem Kamerabild erzeugt. Wie in Fig. 6 ersichtlich ist, erzeugt ein Schweißfunken 52 einen deutlichen Grauwert-Abfall, welcher ausgehend von dem Zentrum des Schweißfunkens 52 entgegengesetzt zu dessen Flugrichtung ist. Je weiter, zeitlich gesehen, die Durchquerung eines bestimmten Bildbereichs zurückliegt, umso mehr nähert sich der Grauwert des entstehenden Schweißfunken-Schweifs 54 dem ursprünglichen Hintergrund an.

Fig. 7 zeigt eine quantitative Auswertung der räumlichen Grauwert-Verteilung eines Bildbereichs, in dem zwei Schweißfunken auftreten. Die Grauwert-Verläufe der beiden Schweißfunken sind darin mit der Bezugsziffer 56 bzw. 56' gekennzeichnet. Die Grauwert-Verläufe 56, 56' erscheinen darin als eine Art Gebirgskamm, welche entlang des "Gebirgskammes" einen annähernd exponentiellen Grauwert-Abfall aufweisen. Die Auswerteeinheit 28 kann also auch dazu eingerichtet sein, den räumlichen Grauwert-Verlauf innerhalb eines Bildbereichs, in dem ein Fremdobjekt 53 detektiert wurde, zu untersuchen, und die sicherheitsrelevante Funktion dann zu unterdrücken, also nicht auszulösen, wenn ein solcher für Schweißfunken 52 typischer exponentieller Grauwert-Abfall detektiert wird. Die Auswerteeinheit 28 ist also mit anderen Worten dazu eingerichtet, den Grauwert-Gradienten benachbarter Bildpixel auszuwerten, um diesen mit einem für Schweißfunken 52 typischen Grauwert-Gradienten-Bereich zu vergleichen. Anhand der Grauwert-Gradienten lässt sich auch relativ exakt die Flugrichtung des Schweißfunkens 52 bestimmen. Diese Flugrichtung lässt sich ebenfalls in oben genannter Klassifizierung der Fremdobjekte 53 verwenden. Aus der Flugrichtung lässt sich nämlich der Ursprung des Fremdobjekts 53 abschätzen. Die Auswerteeinheit 28 kann während eines Teach-In-Vorgangs bspw. darauf eingelernt werden, dass Schweißfunken 52 typischerweise definierten örtlichen Ursprüngen entstammen, nämlich dem Ort des Schweißwerkzeugs.

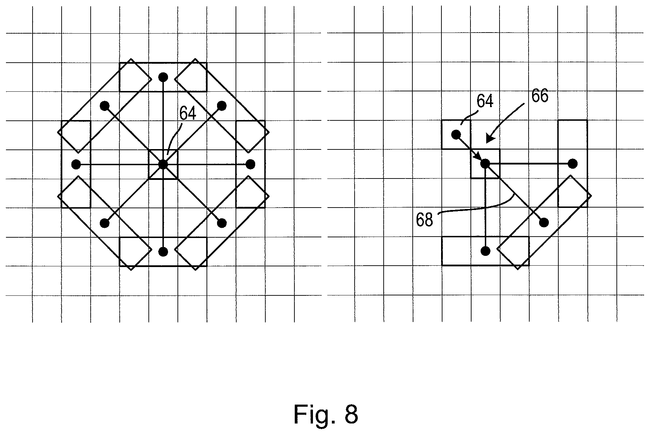

Die Kontur und Ausrichtung bzw. Flugrichtung eines Schweißfunkens wird innerhalb der Auswerteeinheit 28 vorzugsweise anhand eines Skelettierungsverfahrens ermittelt. Das Prinzip eines solchen Skelettierungsverfahrens ist schematisch in Fig. 8 dargestellt. Der Schweif 54 eines Schweißfunkens wird dabei schrittweise abgetastet, um ein sog. Skelett zu erzeugen. Ausgehend von einem Startpixel 64, welches vorzugsweise den höchsten Grauwert aufweist, werden in acht Suchrichtungen die Grauwerte benachbarter Pixel überprüft. Hierzu werden die Grauwerte von mehreren Pixeln, vorzugsweise von drei Pixeln, entweder als Summen oder als Mittelwerte zusammengefasst und mit den übrigen sieben Dreier-Pixelgruppen verglichen. Diese Zusammenfassung verbessert im Wesentlichen die Robustheit des Verfahrens, da lokale Diskontinuitäten im Grauwert-Bild nicht zu Fehlern in der Skelettierung führen. Auf diese Weise entsteht also eine Kette 66 nebeneinanderliegender Bildpixel mit maximalen Grauwerten. Sobald die generelle Grundrichtung 68 des Schweifs 54 bekannt ist, kann der Suchbereich auf drei Richtungen eingegrenzt werden, wie dies im rechten Teil von Fig. 8 schematisch dargestellt ist. Die jeweilige Grundrichtung 68, dessen Dreier-Gruppe die höchste Grauwert-Summe bzw. den höchsten Grauwert-Mittelwert aufweist, wird verwendet, um die Kette 66 um einen weiteren Pixel zu erweitern. Das Skelett lässt sich so iterativ pixelweise zusammensetzen, bis entweder eine Maximallänge erreicht wird, oder der Schweif 54 sich bezüglich der Helligkeit nicht mehr vom Hintergrund unterscheidet.

Die oben genannte Skelettierung kann nicht nur dazu verwendet werden, die Form und Gestalt des Schweißfunkens 52 zu rekonstruieren, sie kann auch in einem weiteren Verfahrensschritt innerhalb der Bildkorrektur-Einheit 34 dazu verwendet werden, die Regionen bzw. Pixel, die im Kamerabild durch den Schweißfunken 52 bedeckt sind, durch Bilddaten bzw. Pixel eines Referenzbilds oder durch Pixel eines vorangegangenen Kamerabilds zu ersetzen. Falls keine räumliche Änderung der Kameraposition stattfindet, ist die pixelweise Ersetzung der durch den Schweißfunken 52 überdeckten Pixel durch Pixel des Vorgängerbilds eine bevorzugte Vorgehensweise. Diese Ersetzung bzw. Bildkorrektur wird vorzugsweise durch die Bildkorrektur-Einheit 34 vorgenommen. Diese Bildkorrektur-Einheit 34 ist bspw. als Software in einem mit dem Kamerasystem 12 verbundenen Computer implementiert. Es versteht sich, dass auch die oben erwähnte Skelettierung durch diese Bildkorrektur-Einheit 34 ausgeführt werden kann. Vorzugsweise ersetzt die Bildkorrektur-Einheit 34 nicht nur die Bildpixel aus dem zuvor ermittelten Skelett, sondern auch die räumlich an das Skelett angrenzende Bildpixel, also sämtliche aufgehellten angrenzenden Bereiche. Dies lässt sich bspw. durch sog. "Region Growing"-Methoden pixelgenau abgrenzen. Vorzugsweise wird dieser Ersetzungsvorgang durch die Bildkorrektur-Einheit 34 in allen verfügbaren Kamerabildern durchgeführt, so dass letztendlich in keinem der Kamerabilder mehr ein Schweißfunken 52 auftaucht.

Besonders bevorzugt verwendet die Bildkorrektur-Einheit 34 bereits die Rohbilddaten der Kamerabilder. Mit anderen Worten werden die Schweißfunken also schon in relativ frühen Bearbeitungsstufen herausgefiltert. In nachgelagerten Bearbeitungsstufen der Bildbearbeitung, die von der Auswerteeinheit 28 ausgeführt werden, innerhalb derer ausgewertet wird, ob sich in dem Schutzbereich 36 Fremdobjekte 53 befinden oder nicht, sind die Schweißfunken 52 also gar nicht mehr vorhanden. Dies hat den Vorteil, dass der nachgelagerte Auswerteprozess die oben genannte Schweißfunken-Berücksichtigung nicht mehr beinhalten muss und damit Rechenzeit eingespart werden kann. An dieser Stelle sei jedoch erwähnt, dass eine derartige Bildkorrektur nicht zwingend notwendig ist. Ebenso ist es möglich, die Schweißfunken 52 in den Kamerabildern zu belassen (also nicht durch Pixel anderer Kamerabilder zu ersetzen), wobei dann die Auswerteeinheit 28 erst in den nachgelagerten Bearbeitungsstufen auswertet, ob es sich bei einem detektierten Fremdobjekt 53 um einen Schweißfunken 52 handelt oder nicht.

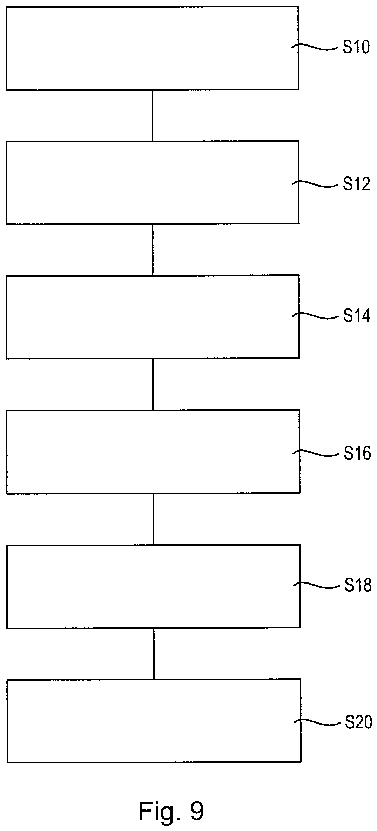

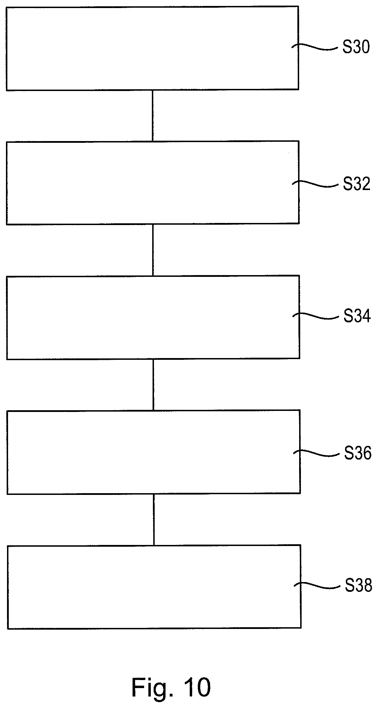

Dies führt also zu zwei unterschiedlichen Ausführungsformen des erfindungsgemäßen Verfahrens, welche in Fig. 9 und 10 schematisch dargestellt sind.

Bei der in Fig. 9 dargestellten, ersten Ausführungsform des erfindungsgemäßen Verfahrens, werden im Verfahrensschritt S10 zunächst Kamerabilder 62 vom Überwachungsbereich 14 erfasst. Im Verfahrensschritt S12 werden diese Kamerabilder (Rohbildmaterial) dann sofort auf Fremdobjekte 53 analysiert, um anhand eines oder mehrerer der oben genannten für Schweißfunken 52 charakteristischer Merkmale zu bestimmen, ob es sich bei dem Fremdobjekt 53 um einen Schweißfunken 52 handelt. Diese Analyse erfolgt vorzugsweise im gesamten Überwachungsbereich 14, um alle Schweißfunken 52 bereits aus den Kamerabildern gleich zu Beginn herauszufiltern, also nicht nur diese, die in dem Schutzbereich 36 vorhanden sind. Die so erkannten Schweißfunken 52 werden dann im Verfahrensschritt S14 in oben genannter Weise durch Bilddaten von Referenzbildern oder zeitlich vorangegangenen Kamerabildern ersetzt, um diese zu überdecken bzw. aus den Kamerabildern herauszulöschen. Im Verfahrensschritt S16 wird dann der zumindest eine Schutzbereich 36 innerhalb des Überwachungsbereichs 14 als virtueller Schutzbereich definiert. Im Verfahrensschritt S18 wird dann ausgewertet, ob sich in dem Schutzbereich 36 Fremdobjekte 53 befinden oder nicht. Da die Klassifizierung bereits in den ersten Bearbeitungsstufen (Verfahrensschritt S12) stattgefunden hat, muss hierbei nicht mehr zwischen sicherheitsrelevanten Fremdobjekten 58 und Schweißfunken 52 unterschieden werden. Im Verfahrensschritt S20 wird dann die sicherheitsrelevante Funktion ausgelöst, wenn ein Fremdobjekt 53 in dem vorangegangenen Verfahrensschritt S18 im Schutzbereich 36 detektiert wurde.

Alternativ dazu können die Schweißfunken 52 auch in den Kamerabildern 62 belassen werden und erst in einer nachgelagerten Bearbeitungsstufe ausgewertet werden, ob es sich bei im Schutzbereich 36 detektierten Objekten 53 um Schweißfunken 52 oder um sicherheitsrelevante Fremdobjekte 58 handelt. Diese zweite Ausführungsform des erfindungsgemäßen Verfahrens ist in Fig. 10 schematisch dargestellt. Hierbei werden in einem ersten Verfahrensschritt S30, ähnlich wie in der ersten Variante, die Kamerabilder vom Überwachungsbereich 14 erzeugt. Im Verfahrensschritt S32 wird dann der zumindest eine virtuelle Schutzbereich 36 innerhalb des Überwachungsbereichs 14 definiert. Im Verfahrensschritt S34 werden die Kamerabilder des Kamerasystems 12 ausgewertet. Hierbei genügt es, lediglich die Bildbereiche des Schutzbereichs 36 auszuwerten, um zu detektieren, ob ein Fremdobjekt 53 in dem Schutzbereich vorhanden ist, oder in diesen eindringt. Im Verfahrensschritt S36 erfolgt dann die Klassifizierung der im Verfahrensschritt S34 detektierten Fremdobjekte 53 anhand der oben genannten für Schweißfunken 52 charakteristischen Merkmale, um zu bestimmen, ob es sich bei dem Fremdobjekt 53 um einen Schweißfunken 52 handelt oder nicht. Sofern eines im Schutzbereich 36 detektiertes Fremdobjekt 53 nicht als Schweißfunken 52 erkannt wurde, wird dann im Verfahrensschritt S38 die sicherheitsrelevante Funktion ausgelöst.

## Patentansprüche

1. Vorrichtung zum Absichern eines Überwachungsbereichs (14), in welchem eine automatisiert arbeitende Maschine (16) angeordnet ist, mit einem Kamerasystem (12) zur Überwachung des Überwachungsbereichs (14), mit einer Konfigurationseinheit (34) zur Definition von zumindest einem Schutzbereich (36) innerhalb des Überwachungsbereichs (14), und mit einer Auswerteeinheit (28) zum Auslösen einer sicherheitsrelevanten Funktion, wobei das Kamerasystem (12) Kamerabilder von dem Schutzbereich (36) liefert und die Auswerteeinheit (28) auswertet, ob ein Fremdobjekt (53) in dem Schutzbereich (36) vorhanden ist oder in diesen eindringt, wobei die Auswerteeinheit (28) ferner dazu eingerichtet ist, ein in dem Schutzbereich (36) vorhandenes oder in diesen eindringendes Fremdobjekt (53) durch Analyse der Kamerabilder zu klassifizieren, um anhand eines oder mehrerer für nicht sicherheitskritische Objekte (52) charakteristischer Merkmale zu bestimmen, ob es sich bei dem Fremdobjekt (53) um ein nicht sicherheitskritisches Objekt (52) handelt, und wobei die Auswerteeinheit (28) dazu eingerichtet ist, die sicherheitsrelevante Funktion auszulösen, wenn das Fremdobjekt (53) nicht als nicht sicherheitskritisches Objekt (52) erkannt wurde,
**dadurch gekennzeichnet, dass** die nicht sicherheitskritischen Objekte Schweißfunken aufweisen, und dass die Auswerteeinheit (28) dazu eingerichtet ist, in zumindest einem der Kamerabilder einen räumlichen Grauwert-Verlauf (56, 56') im Bildbereich eines detektierten Fremdobjekts (53) zu bestimmen, um anhand dessen zu bestimmen, ob es sich bei dem Fremdobjekt (53) um einen Schweißfunken (52) handelt

2. Vorrichtung nach Anspruch 1, mit einer Bildkorrektur-Einheit (30), welche dazu eingerichtet ist, räumliche Bereiche in den Kamerabildern zu ersetzen oder zu korrigieren, wenn in diesen Bereichen durch die Auswerteeinheit (28) ein Schweißfunke (52) detektiert wurde.

3. Vorrichtung nach Anspruch 2, wobei die Bildkorrektur-Einheit (30) dazu eingerichtet ist, die zu ersetzenden räumlichen Bereiche durch Bilddaten zeitlich vorangegangener Kamerabilder zu ersetzen.

4. Vorrichtung nach einem der Ansprüche 1 bis 3, wobei die Auswerteeinheit (28) dazu eingerichtet ist, Grauwerte einzelner Pixel der Kamerabilder auszuwerten und diese mit einem Grauwert-Schwellenwert zu vergleichen, um anhand dessen zu bestimmen, ob es sich bei dem Fremdobjekt (53) um einen Schweißfunken (52) handelt.

5. Vorrichtung nach einem der Ansprüche 1 bis 4, wobei die Auswerteeinheit (28) dazu eingerichtet ist, eine Geschwindigkeit des Fremdobjekts (53) anhand zumindest eines der Kamerabilder auszuwerten und diese mit einem Geschwindigkeits-Schwellenwert zu vergleichen, um anhand dessen zu bestimmen, ob es sich bei dem Fremdobjekt (53) um einen Schweißfunken (52) handelt.

6. Vorrichtung nach Anspruch 5, wobei die Auswerteeinheit (28) dazu eingerichtet ist, die Geschwindigkeit des Fremdobjekts (53) anhand einer Beleuchtungszeit des Kamerasystems (12), einer detektierten Entfernung des Fremdobjekts (53) und einer Anzahl an Pixel, welche das Fremdobjekt (53) in dem Kamerabild einnimmt, zu bestimmen.

7. Vorrichtung nach Anspruch 1, wobei die Auswerteeinheit (28) ferner dazu eingerichtet ist, aus dem Grauwert-Verlauf (56, 56') eine Größe und/oder eine Form des Fremdobjekts (53) abzuschätzen.

8. Vorrichtung nach Anspruch 1, wobei die Auswerteeinheit (28) ferner dazu eingerichtet ist, aus dem Grauwert-Verlauf (56, 56') eine Bewegungsrichtung und/oder einen Herkunftsort des Fremdobjekts (53) abzuschätzen.

9. Vorrichtung nach einem der Ansprüche 1, 7 oder 8, wobei die Auswerteeinheit (28) dazu eingerichtet ist, mittels Skelettierung anhand des Grauwert-Verlaufs (56, 56') eine Kontur des Fremdobjekts (53) zu bestimmen, indem in zumindest einem Kamerabild eine Kette (66) von benachbarten Pixeln ermittelt wird, welche Grauwerte über einem Grauwert-Schwellenwert aufweisen.

10. Vorrichtung nach Anspruch 9, wobei die Auswerteeinheit (28) dazu eingerichtet ist, zur Skelettierung die Grauwerte der Pixel in Gruppen zusammenzufassen.

11. Vorrichtung nach einem der Ansprüche 1 bis 10, wobei die Auswerteeinheit (28) dazu eingerichtet ist, zeitlich aufeinanderfolgende Kamerabilder (62, 62') miteinander zu vergleichen.

12. Vorrichtung nach einem der Ansprüche 1 bis 11, wobei das Kamerasystem (12) ein mehrkanalig-redundantes, multiokulares Kamerasystem (12) ist, das dazu eingerichtet ist, einen Entfernungswert zu ermitteln, der für die räumliche Lage von dem Fremdobjekt (53) repräsentativ ist, wobei der Entfernungswert durch ein Laufzeitmessverfahren und/oder durch einen stereoskopischen Vergleich zweier zeitgleicher Kamerabilder ermittelt wird.

13. Verfahren zum Absichern eines Überwachungsbereichs (14), in welchem eine automatisiert arbeitende Maschine (16) angeordnet ist, mit den Schritten:
- Überwachen des Überwachungsbereichs (14) mit einem Kamerasystem (12),
- Definition von zumindest einem Schutzbereich (36) innerhalb des Überwachungsbereichs (14),
- Auswerten von Kamerabildern des Kamerasystems (12) von dem Schutzbereich (36), um zu detektieren, ob ein Fremdobjekt (53) in dem Schutzbereich (36) vorhanden ist oder in diesen eindringt,
- Klassifizieren des Fremdobjekts (53) durch Analyse der Kamerabilder, um anhand eines oder mehrerer für nicht sicherheitskritische Objekte (52) charakteristischer Merkmale zu bestimmen, ob es sich bei dem Fremdobjekt (53) um ein nicht sicherheitskritisches Objekt (52) handelt,
- Auslösen einer sicherheitsrelevanten Funktion, wenn das Fremdobjekt (53) nicht als nicht sicherheitskritisches Objekt (52) erkannt wurde,
**dadurch gekennzeichnet, dass** die nicht sicherheitskritischen Objekte Schweißfunken aufweisen, und dass das Klassifizieren des Fremdobjekts beinhaltet, dass in zumindest einem der Kamerabilder ein räumlicher Grauwert-Verlauf im Bildbereich eines detektierten Fremdobjekts bestimmt wird, um anhand dessen zu bestimmen, ob es sich bei dem Fremdobjekt um einen Schweißfunken handelt.

14. Computerprogrammprodukt mit einem Datenträger, auf dem ein Programmcode gespeichert ist, der dazu ausgebildet ist, ein Verfahren mit den Verfahrensschritten nach Anspruch 13 auszuführen, wenn der Programmcode in einer Steuerungseinheit für eine Vorrichtung nach einem der Ansprüche 1 bis 12 ausgeführt wird.

## Claims

1. A device for safeguarding a monitoring area (14) in which an automatically operating machine (16) is arranged, having a camera system (12) for monitoring the monitoring area (14), having a configuration unit (34) for defining at least one protection area (36) within the monitoring area (14), and having an analysis unit (28) for triggering a safety-related function, wherein the camera system (12) supplies camera images of the protection area (36) and the analysis unit (28) analyzes whether a foreign object (53) is present in the protection area (36) or penetrates into the protection area (36), wherein the analysis unit (28) is furthermore configured to classify a foreign object (53), which is present in the protection area (36) or penetrates into the protection area (36), by analysis of the camera images, to determine on the basis of one or more features characteristic for non-safety-critical objects (52) whether the foreign object (53) is a non-safety-critical object (52), and wherein the analysis unit (28) is configured to trigger the safety-related function if the foreign object (53) has not been recognized as a non-safety-critical object (52),
**characterized in that** the non-safety-critical objects comprise welding sparks and the analysis unit (28) is configured to determine, in at least one of the camera images, a spatial distribution (56, 56') of grayscale values in an image region of a detected foreign object (53), to determine on the basis thereof whether the foreign object (53) is a welding spark (52).

2. The device as claimed in claim 1, having an image correction unit (30) which is configured to replace or correct spatial regions in the camera images if a welding spark (52) has been detected in these regions by the analysis unit (28).

3. The device as claimed in claim 2, wherein the image correction unit (30) is configured to replace the spatial regions to be replaced with image data of temporally preceding camera images.

4. The device as claimed in any one of claims 1 to 3, wherein the analysis unit (28) is configured to analyze grayscale values of individual pixels of the camera images and to compare them to a grayscale threshold value, to determine on the basis thereof whether the foreign object (53) is a welding spark (52).

5. The device as claimed in any one of claims 1 to 4, wherein the analysis unit (28) is configured to analyze a speed of the foreign object (53) on the basis of at least one of the camera images and to compare it to a speed threshold value, to determine on the basis thereof whether the foreign object (53) is a welding spark (52).

6. The device as claimed in claim 5, wherein the analysis unit (28) is configured to determine the speed of the foreign object (53) on the basis of an illumination time of the camera system (12), a detected distance of the foreign object (53), and a number of pixels which the foreign object (53) occupies in the camera image.

7. The device as claimed in claim 1, wherein the analysis unit (28) is furthermore configured to estimate a size and/or a shape of the foreign object (53) from the spatial distribution (56, 56') of the grayscale values.

8. The device as claimed in claim 1, wherein the analysis unit (28) is furthermore configured to estimate a movement direction and/or an origin location of the foreign object (53) from the spatial distribution (56, 56') of the grayscale values.

9. The device as claimed in any one of claims 1, 7 or 8, wherein the analysis unit (28) is configured to determine a contour of the foreign object (53) by means of a skeletonization that is based on the spatial distribution (56, 56') of the grayscale values, wherein for generating said skeletonization a chain (66) of adjacent pixels having grayscale values greater than a grayscale threshold value is determined in at least one camera image.

10. The device as claimed in claim 9, wherein the analysis unit (28) is configured to combine grayscale values of adjacent pixels into groups for generating said skeletonization.

11. The device as claimed in any one of claims 1 to 10, wherein the analysis unit (28) is configured to compare temporally successive camera images (62, 62') to one another.

12. The device as claimed in any one of claims 1 to 11, wherein the camera system (12) is a multichannel-redundant, multi-ocular camera system (12), which is configured to determine a distance value that is representative of a spatial location of the foreign object (53), wherein the distance value is determined by a runtime measurement method and/or by a stereoscopic comparison of two simultaneous camera images.

13. A method for safeguarding a monitoring area (14) in which an automatically operating machine (16) is arranged, having the following steps:
- monitoring the monitoring area (14) using a camera system (12),
- defining at least one protection area (36) within the monitoring area (14),
- analyzing camera images provided by the camera system (12) of the protection area (36) to detect whether a foreign object (53) is present in the protection area (36) or penetrates into the protection area (36),
- classifying the foreign object (53) by analysis of the camera images, to determine on the basis of one or more features characteristic of non-safety-critical objects (52) whether the foreign object (53) is a non-safety-critical object,
- triggering a safety-related function if the foreign object (53) has not been recognized as a non-safety-critical object (52),
**characterized in that** the non-safety-critical objects comprise welding sparks and the analysis unit (28) is configured to determine, in at least one of the camera images, a spatial distribution (56, 56') of grayscale values in an image region of a detected foreign object (53), to determine on the basis thereof whether the foreign object (53) is a welding spark (52).

14. A computer program product having a data carrier on which a program code is stored that is designed to execute a method having the method steps as claimed in claim 13 when the program code is executed in a control unit of a device as claimed in any one of claims 1 to 12.

## Revendications

1. Dispositif de sécurisation d'une zone de surveillance (14) dans laquelle est située une machine automatisée (16), le dispositif comprenant un système de caméra (12) destiné à surveiller la zone de surveillance (14), une unité de configuration (34) destinée à définir au moins une zone de protection (36) à l'intérieur de la zone de surveillance (14) et une unité d'évaluation (28) destinée à déclencher une fonction liée à la sécurité, le système de caméra (12) fournissant des images de caméra de la zone de protection (36) et l'unité d'évaluation (28) évaluant si un objet étranger (53) est présent ou pénètre dans la zone de protection (36), l'unité d'évaluation (28) étant en outre adaptée pour classifier un objet étranger (53), présent ou pénétrant dans la zone de protection (36), en analysant les images de caméra pour déterminer, par référence à une ou plusieurs caractéristiques d'objets (52) non critiques pour la sécurité, si l'objet étranger (53) est un objet (52) critique pour la sécurité, et l'unité d'évaluation (28) étant adaptée pour déclencher la fonction liée à la sécurité si l'objet étranger (53) n'a pas été reconnu comme un objet (52) non critique pour la sécurité,
**caractérisé en ce que** les objets non critiques pour la sécurité comportent des étincelles de soudage et **en ce que** l'unité d'évaluation (28) est adaptée pour déterminer une variation tridimensionnelle de valeur de gris (56, 56') dans la zone d'image d'un objet étranger (53) détecté dans au moins une des images de caméra afin de déterminer si l'objet étranger (53) est une étincelle de soudage (52).

2. Dispositif selon la revendication 1, comprenant une unité de correction d'image (30) qui est adaptée pour remplacer ou corriger des zones tridimensionnelles dans les images de caméra lorsque, dans ces zones, une étincelle de soudage (52) a été détectée par l'unité d'évaluation (28).

3. Dispositif selon la revendication 2, l'unité de correction d'image (30) étant adaptée pour remplacer les régions tridimensionnelles à remplacer par des données d'image d'images de caméra temporellement précédentes.

4. Dispositif selon l'une des revendications 1 à 3, l'unité d'évaluation (28) étant adaptée pour évaluer des valeurs de gris de pixels individuels des images de caméra et pour les comparer avec une valeur de seuil de valeur de gris afin de déterminer à partir de là si l'objet étranger (53) est une étincelle de soudage (52).

5. Dispositif selon l'une des revendications 1 à 4, l'unité d'évaluation (28) étant adaptée pour évaluer une vitesse de l'objet étranger (53) sur la base d'au moins une des images de caméra et pour les comparer à une valeur de seuil de vitesse afin de déterminer à partir de là si l'objet étranger (53) est une étincelle de soudage (52).

6. Dispositif selon la revendication 5, l'unité d'évaluation (28) étant adaptée pour mesurer la vitesse de l'objet étranger (53) sur la base d'un temps d'éclairage du système de caméra (12), d'une distance détectée de l'objet étranger (53) et d'un nombre de pixels représentant l'objet étranger (53) dans l'image de caméra.

7. Dispositif selon la revendication 1, l'unité d'évaluation (28) étant en outre adaptée pour estimer à partir de la variation de valeurs de gris (56, 56') une taille et/ou une forme de l'objet étranger (53).

8. Dispositif selon la revendication 1, l'unité d'évaluation (28) étant en outre adaptée pour estimer à partir de la variation de valeur de gris (56, 56') une direction de mouvement et/ou un lieu d'origine de l'objet étranger (53).

9. Dispositif selon l'une des revendications 1, 7 et 8, l'unité d'évaluation (28) étant adaptée pour déterminer par squelettisation à partir de la variation de valeur de gris (56, 56') un contour de l'objet étranger (53) par détermination, dans au moins une image de caméra, d'une chaîne (66) de pixels adjacents qui comportent des niveaux de gris supérieurs à une valeur de seuil de valeur de gris.

10. Dispositif selon la revendication 9, l'unité d'évaluation (28) étant adaptée pour rassembler les valeurs de gris des pixels en groupes en vue de la squelettisation.

11. Dispositif selon l'une des revendications 1 à 10, l'unité d'évaluation (28) étant adaptée pour comparer entre elles des images de caméra (62, 62') temporellement successives.

12. Dispositif selon l'une des revendications 1 à 11, le système de caméra (12) étant un système de caméra multioculaire et redondant multicanaux (12) qui est adapté pour déterminer une valeur de distance représentative de la position tridimensionnelle de l'objet étranger (53), la valeur de distance étant déterminée par un procédé de mesure de temps de propagation et/ou par une comparaison stéréoscopique de deux images de caméra simultanées.

13. Procédé de sécurisation d'une zone de surveillance (14) dans laquelle est située une machine automatisée (16), le procédé comprenant les étapes suivantes :
- surveiller la zone de surveillance (14) au moyen d'un système de caméra (12),
- définir au moins une zone de protection (36) à l'intérieur de la zone de surveillance (14),
- évaluer des images de caméra du système de caméra (12), qui proviennent de la zone de protection (36), pour détecter si un objet étranger (53) est présent ou pénètre dans la zone de protection (36),
- classer l'objet étranger (53) par analyse des images de caméra pour déterminer, sur la base d'une ou de plusieurs caractéristiques d'objets (52) non critiques pour la sécurité, si l'objet étranger (53) est un objet (52) non critique pour la sécurité,
- déclencher une fonction liée à la sécurité si l'objet étranger (53) n'a pas été reconnu comme objet (52) non critique pour la sécurité,
**caractérisé en ce que** les objets non critiques pour la sécurité comportent des étincelles de soudage et **en ce que** la classification de l'objet étranger inclut le fait que, dans au moins une des images de caméra, une variation tridimensionnelle de valeur de gris dans la zone d'image d'un objet étranger détecté est déterminée afin de déterminer si l'objet étranger est une étincelle de soudage.

14. Produit de programme informatique comprenant un support de données sur lequel est stocké un code de programme conçu pour exécuter un procédé comprenant les étapes de procédé selon la revendication 13, lorsque le code de programme est exécuté dans une unité de commande d'un dispositif selon l'une des revendications 1 à 12.
